(19) 

Europäisches
Patentamt
European
Patent Office
Office européen
des brevets

(11) **EP 4 101 878 A1**

(12) **EUROPEAN PATENT APPLICATION**
published in accordance with Art. 153(4) EPC

(43) Date of publication:
**14.12.2022 Bulletin 2022/50**

(21) Application number: **21751209.4**

(22) Date of filing: **27.01.2021**

(51) International Patent Classification (IPC):
*C08J 5/24* (2006.01)     *C08K 7/06* (2006.01)
*C08G 18/00* (2006.01)    *C08G 59/40* (2006.01)
*C08K 7/14* (2006.01)     *C08K 9/04* (2006.01)
*C08L 63/00* (2006.01)

(52) Cooperative Patent Classification (CPC):
**C08J 5/24; C08K 7/06;** C08G 18/00; C08G 59/40;
C08K 7/14; C08K 9/04; C08L 63/00

(86) International application number:
**PCT/JP2021/002756**

(87) International publication number:
**WO 2021/157442 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.02.2020 JP 2020015995
21.02.2020 JP 2020027904**

(71) Applicant: **Toray Industries, Inc.
Tokyo, 103-8666 (JP)**

(72) Inventors:
• **MATSUKAWA, Ko**
  **Nagoya-shi, Aichi 455-8502 (JP)**
• **KOYANAGI, Shizue**
  **Nagoya-shi, Aichi 455-8502 (JP)**
• **HIRANO, Masanori**
  **Iyo-gun, Ehime 791-3193 (JP)**
• **TOMIOKA, Nobuyuki**
  **Nagoya-shi, Aichi 455-8502 (JP)**

(74) Representative: **Mewburn Ellis LLP
Aurora Building
Counterslip
Bristol BS1 6BX (GB)**

(54) **MOLDING MATERIAL AND FIBER REINFORCED COMPOSITE MATERIAL**

(57)     The purpose of the present invention is to provide: a molding material from which a carbon fiber reinforced composite material having excellent impact resistance and tensile strength is obtained; and a molding material from which a glass fiber reinforced composite material, that has high bending strength and impact resistance, has excellent weather resistance, and can suppress a decrease in bending strength after water absorption, is obtained. In order to achieve the purpose, the molding material according to the present invention is a molding material formed of an epoxy resin composition and a carbon fiber and/or a glass fiber, wherein the epoxy resin composition includes all of [A] to [C], the carbon fiber satisfies conditions [a] and [b], and the glass fiber has a surface functional group capable of forming a covalent bond with an isocyanate group. [A] Epoxy resin having at least two oxylan groups in molecule [B] Epoxy resin curing agent having at least two isocyanate groups in molecule [C] Catalyst [a] Having substantially perfect circular cross section [b] Average fiber diameter of 4.0-8.0 $\mu$m

EP 4 101 878 A1

**Description**

TECHNICAL FIELD

The present invention relates to a molding material for fiber-reinforced composite material and a fiber-reinforced composite material.

BACKGROUND ART

A fiber-reinforced composite material (FRP), which contains a reinforcing fiber and a matrix resin, can be designed using advantages of the reinforcing fiber and the matrix resin, so that the fiber-reinforced composite material has been more widely used in the fields of aerospace, sports, general industry, and the like.

As the reinforcing fiber, fibers such as glass fibers, aramid fibers, carbon fibers, and boron fibers are used. As the matrix resin, both thermosetting resins and thermoplastic resins are used. From the viewpoint of heat resistance and producibility, the thermosetting resins are often used. As the thermosetting resin, resins such as epoxy resins, unsaturated polyester resins, vinyl ester resins, phenol resins, bismaleimide resins, and cyanate resins are used. Among them, epoxy resins are preferably used from the viewpoint of adhesiveness between the resin and the reinforcing fiber, dimensional stability, and mechanical properties such as strength and stiffness of the obtained composite material.

When the fiber-reinforced composite material is used for large members such as automobiles, aircrafts, and blades for windmill generators, the fiber-reinforced composite material is required to be lightweight and high in strength. In addition, since the material is often used outdoors, it is required that the strength does not decrease even when exposed to water such as rain and moisture. Therefore, matrix resins and reinforcing-fiber base materials used for these fiber-reinforced composite materials are required to have good impregnating properties.

For molding a fiber-reinforced composite material, methods such as a prepreg molding method, a hand lay-up method, a filament winding method, a pultrusion method, resin transfer molding (RTM), resin film infusion method, and a press forming method are employed. Particularly when productivity is required, the RTM method, resin film infusion method, and press forming method that have good productivity are preferably employed.

As the matrix resin used in the method for molding the fiber-reinforced composite material as described above, a liquid or semi-solid thermosetting resin, that is, a thermosetting resin having a low molecular weight, at room temperature is used in order to sufficiently impregnate the reinforcing-fiber base material. Since a cured product of a thermosetting resin generally has lower toughness than that of a thermoplastic resin, it has been a problem that a fiber-reinforced composite material using such a thermosetting resin has relatively low impact resistance.

Among these reinforcing fibers, the carbon fiber is preferably used because it is possible to obtain a fiber-reinforced composite material that is lightweight but has excellent mechanical properties such as strength and elastic modulus. In order to improve the adhesiveness between the carbon fiber and the matrix resin, a functional group such as a hydroxyl group or a carboxyl group is often introduced to the surface by electrochemically or chemically treating the carbon fiber. However, there has been the problem that the matrix resin does not efficiently react with the functional groups on the surface of the carbon fiber when the matrix resin is cured, resulting in failure in improvement of the adhesiveness between the carbon fiber and the matrix resin and low impact resistance.

For example, in Cited Document 1, an amine-cured epoxy resin is used as a matrix resin, and core shell rubber particles are added in order to improve toughness. Cited Document 2 is characterized by using an acid anhydride-cured epoxy resin as a matrix resin and showing low viscosity and fast curability.

In addition, glass fibers are also preferably used as reinforcing fibers for the large members described above because cost reduction and weight reduction are possible. A fiber-reinforced composite material to be obtained is required to have high strength and weather resistance so that a reinforcing-fiber base material can be impregnated with a resin at the time of molding and that the fiber-reinforced composite material can withstand a severe use environment for a long period of time.

For example, Cited Document 3 is characterized by showing low viscosity and low water absorbability by using a predetermined epoxy resin component and amine compound as a matrix resin of a fiber-reinforced composite material. Cited Document 4 is characterized by using an acid anhydride-cured epoxy resin as a matrix resin and showing low viscosity and fast curability.

PRIOR ART DOCUMENTS

PATENT DOCUMENTS

Patent Document 1: International Publication No. 2011/077094
Patent Document 2: International Publication No. 2016/158757
Patent Document 3: Japanese Patent Laid-open Publication No. 2017-226773
Patent Document 4: International Publication No. 2016/158757

SUMMARY OF THE INVENTION

PROBLEMS TO BE SOLVED BY THE INVENTION

The epoxy resin in Cited Document 1 still has poor toughness, and due to the addition of core shell rubber particles, the epoxy resin has high viscosity at the injection temperature and poor impregnating properties. Furthermore, the epoxy resin in Cited Document 1 has poor adhesiveness with reinforcing fibers, and the impact resistance of a fiber-reinforced composite material obtained using the epoxy resin is also poor. The epoxy resin in Cited Document 2 cannot be said to have sufficient toughness and adhesiveness with reinforcing fibers, and there is a problem in improving the impact resistance of a fiber-reinforced composite material obtained using the epoxy resin.

In addition, although the epoxy resin in Cited Document 3 has low viscosity and low water absorbability, adhesiveness when combined with reinforcing fibers is still insufficient, and there is a problem in strength of a fiber-reinforced composite material obtained using the epoxy resin. Furthermore, although the epoxy resin in Cited Document 4 is excellent in the resin impregnating property into the reinforcing-fiber base material, it cannot be said that water absorbability and adhesiveness with reinforcing fibers are sufficient, and there is a problem in strength and weather resistance of a fiber-reinforced composite material obtained using the epoxy resin.

An object of the present invention is to provide a molding material for fiber-reinforced composite material for providing a carbon fiber reinforced material having excellent impact resistance and tensile strength using an epoxy resin composition having good impregnating properties. Another object of the present invention is to provide a molding material for fiber-reinforced composite material for providing a glass fiber-reinforced composite material having high bending strength and impact resistance and excellent weather resistance, that is, capable of suppressing a decrease in bending strength after water absorption, by using an epoxy resin composition having good impregnating properties and a glass fiber excellent in adhesiveness with the epoxy resin composition.

SOLUTIONS TO THE PROBLEMS

A molding material for fiber-reinforced composite material of the present invention for solving the above problems is a molding material for fiber-reinforced composite material including an epoxy resin composition and carbon fiber and/or glass fiber, in which the epoxy resin composition contains all of [A] to [C] below, the carbon fiber satisfies conditions [a] and [b] below, and the glass fiber has a surface functional group capable of forming a covalent bond with an isocyanate group:

   [A] an epoxy resin having at least two oxirane groups in a molecule,
   [B] an epoxy resin curing agent having at least two isocyanate groups in a molecule, and
   [C] a catalyst, and

      [a] the cross-section is substantially perfectly circular, and
      [b] the average fiber diameter is in the range of 4.0 to 8.0 $\mu$m.

EFFECTS OF THE INVENTION

According to the present invention, by using carbon fibers satisfying specific conditions and an epoxy resin composition having a specific configuration in combination, a fiber-reinforced composite material excellent in impact resistance and tensile strength can be obtained while using an epoxy resin composition having good impregnating properties and a reinforcing-fiber base material. In addition, by using glass fibers satisfying specific conditions and an epoxy resin composition having a specific configuration in combination, it is possible to obtain a fiber-reinforced composite material that has high bending strength and impact resistance and can suppress a decrease in bending strength after water absorption while using an epoxy resin composition having good impregnating properties and a reinforcing-fiber base material.

EMBODIMENTS OF THE INVENTION

A molding material for fiber-reinforced composite material of the present invention is a molding material for fiber-reinforced composite material including an epoxy resin composition and carbon fiber and/or glass fiber, in which the epoxy resin composition contains all of [A] to [C] below, the carbon fiber satisfies conditions [a] and [b] below, and the glass fiber has a surface functional group capable of forming a covalent bond with an isocyanate group:

[A] an epoxy resin having at least two oxirane groups in a molecule,
[B] an epoxy resin curing agent having at least two isocyanate groups in a molecule, and
[C] a catalyst, and

[a] the cross-section is substantially perfectly circular, and
[b] the average fiber diameter is in the range of 4.0 to 8.0 $\mu$m.

A first preferable aspect of the molding material for fiber-reinforced composite material of the present invention includes an epoxy resin composition and carbon fiber.

In the molding material for fiber-reinforced composite material of the present invention, it is essential that the carbon fiber has a substantially perfectly circular cross section. Here, the cross-sectional shape being substantially perfectly circular means that the ratio (r/R) of the major axis R to the minor axis r of the cross-section of a filament measured using an optical microscope is 0.9 or more. Here, the major axis R refers to the diameter of the circumscribed circle of the cross-sectional shape of the filament, and the minor axis r refers to the diameter of the inscribed circle of the cross-sectional shape of the filament. When the carbon fiber is not in a perfectly circular shape, the injection time of the matrix resin into the reinforcing-fiber base material containing such carbon fiber becomes long, which may cause formation of an unimpregnated region.

In the molding material for fiber-reinforced composite material of the present invention, it is essential that the carbon fiber has an average fiber diameter in the range of 4.0 to 8.0 $\mu$m, preferably in the range of 5.0 to 7.0 $\mu$m, more preferably in the range of 5.3 to 7.0 $\mu$m, as measured using an optical microscope. When the average fiber diameter is less than 4.0 $\mu$m, the impact resistance of the fiber-reinforced composite material employing such carbon fiber is deteriorated. On the other hand, when the average fiber system is more than 8.0 $\mu$m, the tensile strength of the fiber-reinforced composite material employing such carbon fiber is reduced.

In the molding material for fiber-reinforced composite material of the present invention, the carbon fiber preferably further satisfies the following condition [c] :
[c] the surface oxygen concentration O/C is in the range of 0.03 to 0.20.

Here, the surface oxygen concentration is specified by calculating the surface oxygen concentration O/C = ($[O_{1s}]/[C_{1s}]$)/(sensitivity correction value) from the $O_{1s}$ peak area $[O_{1s}]$ and the $C_{1s}$ peak area $[C_{1s}]$ in the X-ray photoelectron spectroscopy. The surface oxygen concentration O/C is more preferably in the range of 0.05 to 0.20, still more preferably in the range of 0.05 to 0.15. When the concentration O/C is 0.20 or less, the fiber-reinforced composite material employing such carbon fiber tends to have sufficient tensile strength. When the concentration O/C is 0.05 or more, the fiber-reinforced composite material employing such carbon fiber tends to have sufficient impact resistance. Examples of the means for setting the surface oxygen concentration O/C within the above range include a method of changing the type and concentration of an electrolytic solution used in the electrolytic oxidation treatment and a method of changing the quantity of electricity.

In the molding material for fiber-reinforced composite material of the first preferable aspect of the present invention, besides carbon fibers, inorganic fibers such as glass fibers, metal fibers, and ceramic fibers, organic synthetic fibers such as polyamide fibers, polyester-based fibers, polyolefin-based fibers, and novoloid fibers, metal wires, metal meshes, and metal nonwoven fabrics made of gold, silver, copper, bronze, brass, phosphor bronze, aluminum, nickel, steel, stainless steel, and the like can be used in combination to the extent that the effect of the present invention is not impaired.

In the molding material for fiber-reinforced composite material of the first preferable aspect of the present invention, the content of the carbon fiber in all fibers is preferably 30% by mass or more, more preferably 50% by mass or more, still more preferably 70% by mass or more. When the content of the carbon fiber is within the above range, a fiber-reinforced composite material that is lightweight and excellent in mechanical properties such as impact resistance, strength, and elastic modulus can be obtained, which is preferable.

In the molding material for fiber-reinforced composite material of the present invention, the carbon fiber may be either a short fiber or a continuous fiber, or both may be used in combination. In order to obtain a fiber-reinforced composite material having a high Vf, continuous fibers are preferable.

In the molding material for fiber-reinforced composite material of the present invention, the carbon fiber is sometimes used in a strand form, but a substrate made of carbon fiber obtained by processing carbon fiber into a form of mat, woven fabric, knit, braid, or one directional sheet is preferably used. In particular, a woven fabric is preferably used because it serves to easily obtain a fiber-reinforced composite material with a high Vf and it is excellent in handleability.

The ratio of the net volume of the carbon fiber to the apparent volume of the woven fabric is regarded as the filling rate of the woven fabric. The filling rate of the woven fabric is determined from the areal weight W (unit: $g/m^2$), the thickness t (unit: mm), and the density pf (unit: $g/cm^3$) of the carbon fiber by the formula $W/(1000t \cdot \rho f)$. The areal weight and thickness of the woven fabric are determined in conformity with JIS R 7602: 1995. Since it is easier to obtain a fiber-reinforced composite material having a high Vf when the filling rate of the woven fabric is higher, the filling rate of the woven fabric is preferably in the range of 0.10 to 0.85, preferably 0.40 to 0.85, more preferably 0.50 to 0.85.

A second preferable aspect of the molding material for fiber-reinforced composite material of the present invention includes an epoxy resin composition and a glass fiber.

In the molding material for fiber-reinforced composite material of the present invention, it is essential that the glass fiber has a surface functional group capable of forming a covalent bond with an isocyanate group. It is known that silicon (Si-OH) to which a hydroxyl group has been bonded, which is called a silanol group, exists on the surface of glass fibers, and it is known that chemical characteristics of the surface of glass fibers can be improved by bonding a coupling agent or the like having various functional groups to the silanol group as necessary. Here, having a surface functional group capable of forming a covalent bond with an isocyanate group means that at least one or more functional groups capable of forming covalent bonds by a chemical reaction with isocyanate groups are present on the surface of the glass fiber. When the glass fiber has a surface functional group capable of forming a covalent bond with an isocyanate group, the glass fiber can be chemically bonded to the epoxy resin curing agent [B] having at least two isocyanate groups in the molecule contained in the epoxy resin composition, and the adhesiveness between the glass fiber and the epoxy resin composition is improved in the resulting fiber-reinforced composite material, so that high strength is easily exhibited. However, when the adhesiveness between the glass fiber and the epoxy resin composition is excessively improved, impact resistance may be deteriorated as described later, and it is preferable that the surface of the glass fiber is moderately treated with a coupling agent or the like.

In the molding material for fiber-reinforced composite material of the present invention, the surface functional group of the glass fiber is preferably at least one functional group selected from the group consisting of a hydroxyl group, an oxirane group, an amino group, a thiol group, and a carboxyl group. When the glass fiber has the surface functional group as described above, excellent adhesiveness is easily exhibited at the interface between the glass fiber and the epoxy resin composition. Among them, from the viewpoint of moderately improving the adhesive strength, the surface functional group of the glass fiber is preferably an amino group because the glass fiber easily conforms with the epoxy resin composition and easily and moderately forms a covalent bond with the epoxy resin curing agent [B] having at least two isocyanate groups in the molecule.

In the molding material for fiber-reinforced composite material of the present invention, the glass fiber preferably has a functional group having an active hydrogen on the surface thereof. Here, the active hydrogen refers to a highly reactive hydrogen atom bonded to nitrogen, oxygen, or sulfur in an organic compound. For example, one amino group has two active hydrogens. Examples of the functional group having active hydrogen include a hydroxyl group, an amino group, a thiol group, and a carboxyl group.

In the molding material for fiber-reinforced composite material of the present invention, the surface functional group of the glass fiber is preferably formed by being treated with at least one selected from the group consisting of a silane coupling agent, a titanium coupling agent, an aluminum coupling agent, and a zirconium coupling agent. One coupling agent may be used singly, or two or more coupling agents may be used in combination. When the amount of silanol groups on the surface of the glass fiber is too large, the glass fiber is chemically bonded strongly to the epoxy resin curing agent [B] having at least two isocyanate groups in the molecule contained in the epoxy resin composition, and the adhesiveness is improved. However, the strength of the fiber cannot be utilized when a fracture is formed due to the application of an impact, and the epoxy resin is broken, so that the impact resistance may be deteriorated. Therefore, it is preferable that the surface of the glass fiber is moderately treated with a coupling agent or the like.

Examples of the silane coupling agent used for glass fiber in the molding material for fiber-reinforced composite material of the present invention include amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; thiol group-containing silanes such as γ-mercaptopropyltrimethoxysilane, γ-mercaptopropyltriethoxysilane, γ-mercaptopropylmethyldimethoxysilane, and γ-mercaptopropylmethyldiethoxysilane; oxirane group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; and carboxyl group-containing silanes such as β-carboxyethyltriethoxysilane, β-carboxyethylphenylbis(2-methoxyethoxy)silane, and N-β-(carboxymethyl)aminoethyl-γ-aminopropyltrimethoxysilane.

Examples of the titanium coupling agent include isopropyl tri(N-aminoethyl-aminoethyl) titanate, tetraoctyl bis(ditridecyl phosphite) titanate, tetra(2,2-diallyloxymethyl-1-butyl) bis(ditridecyl) phosphite titanate, bis(dioctyl pyrophosphate) oxyacetate titanate, bis(dioctyl pyrophosphate) ethylene titanate, isopropyl trioctanoyl titanate, isopropyl dimethacryl isostearoyl titanate, isopropyl tridodecyl benzenesulfonyl titanate, isopropyl isostearoyl diacrylic titanate, isopropyl tri(dioctyl phosphate) titanate, isopropyl tricumyl phenyl titanate, and tetraisopropyl bis(dioctyl phosphite) titanate.

Among them, silane coupling agents of amino group-containing silanes are preferable because they easily conform with the epoxy resin composition and can moderately improve the adhesive strength and the impact resistance.

When the molding material for fiber-reinforced composite material of the present invention contains a coupling agent, the content is preferably 0.01 to 5 parts by mass, more preferably 0.05 to 4 parts by mass, still more preferably 0.1 to 3 parts by mass, with respect to 100 parts by mass of the glass fiber. When the content of the coupling agent is within the above range, the wettability of the glass fiber by the epoxy resin composition is improved, and the adhesiveness and impregnating property are moderately improved, so that impact resistance can be improved, which is preferable.

Examples of the method for forming a coupling agent layer include a method in which a solution containing the coupling agent is applied to the surface of the glass fiber base material and then heat-treated. The solvent used for the solution formation of the coupling agent is not particularly limited as long as it does not react with the coupling agent. Examples thereof include aliphatic hydrocarbon-based solvents such as hexane, aromatic solvents such as benzene, toluene, and xylene, ether-based solvents such as tetrahydrofuran, alcohol-based solvents such as methanol and propanol, ketone-based solvents such as acetone, and water, and one kind or a mixture of two or more kinds of these solvents is used.

In the molding material for fiber-reinforced composite material of the present invention, any kind of glass fiber can be used as the glass fiber depending on the intended use. Examples of the glass fiber include E-glass, A-glass, C-glass, D-glass, R-glass, S-glass, E-CR-glass, NE-glass, quartz, and those prepared from fiberizable glass compositions commonly known as fluorine-free and/or boron-free E-glass derivatives. In addition to glass fibers, inorganic fibers such as carbon fibers, metal fibers, and ceramic fibers, organic synthetic fibers such as polyamide fibers, polyester-based fibers, polyolefin-based fibers, and novoloid fibers, metal wires, metal meshes, and metal nonwoven fabrics made of gold, silver, copper, bronze, brass, phosphor bronze, aluminum, nickel, steel, stainless steel, and the like can be used in combination to the extent that the effect of the second preferable aspect of the molding material for fiber-reinforced composite material of the present invention is not impaired.

In the second preferable aspect of the molding material for fiber-reinforced composite material of the present invention, the content of the glass fiber in all fibers is preferably 30% by mass or more, more preferably 50% by mass or more, still more preferably 70% by mass or more. When the content of the glass fiber is within the above range, a fiber-reinforced composite material that is excellent in mechanical properties such as impact resistance and strength and weather resistance can be obtained, which is preferable.

In the molding material for fiber-reinforced composite material of the present invention, the glass fiber may be either a continuous fiber or a short fiber, or both may be used in combination. Further, the continuous fiber may be cut into chopped strands (short fibers).

As the form of the glass fiber, the glass fiber can be preferably used as a base material processed into a strand, a mat, a nonwoven fabric, a woven fabric, a knit, a braid, a one directional sheet, or the like. In particular, a woven fabric is preferably used because it serves to easily obtain a fiber-reinforced composite material with a high fiber volume fraction (Vf) and it is excellent in handleability.

When a glass fiber is used in a woven fabric, a conventionally known two-dimensional woven fabric can be used. The structure is preferably any structure selected from the group consisting of plain weave, twill weave, gauze weave, mock leno weave, diagonal weave, double weave, and satin weave, and these woven structures may be used singly or in combination.

The ratio of the net volume of the glass fiber to the apparent volume of the woven fabric is regarded as the filling rate of the woven fabric. The filling rate of the woven fabric is determined from the areal weight W (unit: $g/m^2$), the thickness t (unit: mm), and the density pf (unit: $g/cm^3$) of the glass fiber by the formula $W/(1000t \cdot \rho f)$. The areal weight and thickness of the woven fabric are determined in conformity with JIS R 7602: 1995. Since it is easier to obtain a fiber-reinforced composite material having a high fiber volume fraction (Vf) when the filling rate of the woven fabric is higher, the filling rate of the woven fabric is preferably in the range of 0.10 to 0.85, preferably 0.40 to 0.85, more preferably 0.50 to 0.85.

When the glass fiber is used in chopped strands, the average fiber length is not limited but is 1 to 20 mm, preferably 3 to 10 mm. When the average fiber length of the chopped strands is in this range, the average fiber length in the glass fiber-reinforced composite material becomes appropriate, and there is a tendency that physical properties such as bending strength are improved or handling at the time of mixing with the epoxy resin composition is improved.

The molding material for fiber-reinforced composite material of the present invention contains an epoxy resin composition. The epoxy resin composition is required to contain an epoxy resin [A] (hereinafter sometimes referred to as a constituent element [A]) having at least two oxirane groups in the molecule. By having such a structure, the mechanical characteristics and moldability of the fiber-reinforced composite material can be obtained. Among them, the constituent element [A] is preferably an epoxy resin having a number average molecular weight in the range of 200 to 800 and containing an aromatic group in the skeleton because an epoxy resin has a low viscosity and is excellent in impregnating properties into reinforcing fibers and mechanical properties such as heat resistance and elastic modulus when formed into a fiber-reinforced composite material. The number average molecular weight of the epoxy resin is determined by gel permeation chromatography (GPC) using, for example, a polystyrene standard sample. For an epoxy resin whose epoxy equivalent weight is known, a numerical value calculated from the product of the epoxy equivalent weight and the number of epoxy functional groups can also be used.

Examples of the epoxy resin include bisphenol type epoxy resins and amine type epoxy resins.

Examples of the bisphenol type epoxy resin include a bisphenol A type epoxy resin, a bisphenol F type epoxy resin, a bisphenol AD type epoxy resin, and a halogen- or alkyl-substituted derivative or a hydrogenated product thereof. Specific examples of the epoxy resin include the followings.

Examples of commercially available products of the bisphenol A type epoxy resin include "jER (registered trademark)" 825, "jER (registered trademark)" 827, "jER (registered trademark)" 828 (the above products are manufactured by Mitsubishi Chemical Corporation), "EPICLON (registered trademark)" 840, "EPICLON (registered trademark)" 850 (the above products are manufactured by DIC Corporation), "Epotohto (registered trademark)" YD-128, "Epotohto (registered trademark)" YD-8125, "Epotohto (registered trademark)" YD-825GS (manufactured by Nippon Steel Chemical & Materials Co., Ltd.), "DER (registered trademark)" 331, and "DER (registered trademark)" 332 (the above products are manufactured by The Dow Chemical Company).

Examples of commercially available products of the bisphenol F type epoxy resin include "jER (registered trademark)" 806, "jER (registered trademark)" 807, "jER (registered trademark)" 4004P (the above products are manufactured by Mitsubishi Chemical Corporation), "EPICLON (registered trademark)" 830 (manufactured by DIC Corporation), "Epotohto (registered trademark)" YD-170, "Epotohto (registered trademark)" YDF-8170C, and "Epotohto (registered trademark)" YDF-870GS (the above products are manufactured by NIPPON STEEL Chemical & Material Co., Ltd.).

Examples of commercially available products of the bisphenol AD type epoxy resin include EPOX-MK R710 and EPOX-MK R1710 (the above products are manufactured by Printec Corporation).

Examples of the amine type epoxy resin include tetraglycidyl diaminodiphenylmethane, tetraglycidyl diaminodiphenyl sulfone, triglycidyl aminophenol, triglycidyl aminocresol, diglycidyl aniline, diglycidyl toluidine, tetraglycidyl xylylenediamine, and halogen or alkyl-substituted derivatives and hydrogenated products thereof. Specific examples of the epoxy resin include the followings.

Examples of commercially available products of tetraglycidyl diaminodiphenylmethane include "SUMI-EPOXY (registered trademark)" ELM434 (manufactured by SUMITOMO CHEMICAL COMPANY, LIMITED), YH434L (manufactured by NIPPON STEEL Chemical & Material Co., Ltd.), "jER (registered trademark)" 604 (manufactured by Mitsubishi Chemical Corporation), "Araldide (registered trademark)" MY720, and "Araldide (registered trademark)" MY721 (the above materials are manufactured by Huntsman Advanced Materials LLC.) .

Examples of commercially available products of tetraglycidyl diaminodiphenyl sulfone include TG3DAS (manufactured by Mitsui Fine Chemicals, Inc.).

Examples of commercially available products of triglycidyl aminophenol or triglycidyl aminocresol include "SUMI-EPOXY (registered trademark)" ELM100, "SUMI-EPOXY (registered trademark)" ELM120 (the above products are manufactured by Sumitomo Chemical Industry Company Limited), "Araldide (registered trademark)" MY0500, "Araldide (registered trademark)" MY0510, "Araldide (registered trademark)" MY0600 (the above products are manufactured by Huntsman Advanced Materials LLC.), and "jER (registered trademark)" 630 (manufactured by Mitsubishi Chemical Corporation).

Examples of commercially available products of diglycidyl aniline include GAN (manufactured by Nippon Kayaku Co., Ltd.) and PxGAN (manufactured by Toray Fine Chemicals Co., Ltd.).

Examples of commercially available products of diglycidyl toluidine include GOT (manufactured by Nippon Kayaku Co., Ltd.).

Examples of commercially available products of tetraglycidyl xylylenediamine and a hydrogenated compound thereof include "TETRAD (registered trademark)"-X and "TETRAD (registered trademark)"-C (the above products are manufactured by Mitsubishi Gas Chemical Co., Inc.).

Among them, tetraglycidyldiaminodiphenylmethane and triglycidyldiaminophenol are preferably used because they have both high elastic moduli and high heat resistance.

The epoxy resin composition used in the present invention is required to contain an epoxy resin curing agent [B] (hereinafter sometimes referred to as a constituent element [B]) having at least two isocyanate groups in the molecule. Such an isocyanate group mainly reacts with the oxirane group of the constituent element [A] to form a bonding point of an oxazolidone ring, and high heat resistance can be exhibited. Among them, the constituent element [B] preferably includes an aromatic structure in order to impart higher heat resistance.

Examples of the constituent element [B] include aliphatic isocyanates such as ethylene diisocyanate, trimethylene diisocyanate, dodecamethylene diisocyanate, hexamethylene diisocyanate, tetramethylene diisocyanate, pentamethylene diisocyanate, propylene-1,2-diisocyanate, 2,3-dimethyltetramethylene diisocyanate, butylene-1,2-diisocyanate, butylene-1,3-diisocyanate, 1,4-diisocyanate hexane, cyclopentene-1,3-diisocyanate, isophorone diisocyanate, 1,2,3,4-tetraisocyanate butane, butane-1,2,3-triisocyanate, and $\alpha,\alpha,\alpha',\alpha'$-tetramethylxylylene diisocyanate; aromatic isocyanates such as p-phenylene diisocyanate, 1-methylphenylene-2,4-diisocyanate, naphthalene-1,4-diisocyanate, tolylene diisocyanate, diphenyl-4,4-diisocyanate, benzene-1,2,4-triisocyanate, xylylene diisocyanate, diphenylmethane diisocyanate (MDI), diphenylpropane diisocyanate, tetramethylene xylene diisocyanate, and polymethylene polyphenyl polyisocyanate; aliphatic isocyanates such as methylene diisocyanate, propylene diisocyanate, lysine diisocyanate, trimethylhexamethylene diisocyanate, and hexamethylene diisocyanate; alicyclic isocyanates such as cyclohexane diisocyanate, methylcyclohexane diisocyanate, isophorone diisocyanate, methylenebis(4-cyclohexyl isocyanate), and isopropylidenedicyclohexyl diisocyanate; and those having a structure in which these are linked by a methylene group or the like. In addition, these polyisocyanate compounds and the like may be used alone or in combination of two or more.

Examples of commercially available products of the aliphatic isocyanates include HDI (manufactured by Tosoh Corporation), "Duranate (registered trademark)" D101, and "Duranate (registered trademark)" D201 (the above are manufactured by Asahi Kasei Corporation).

Examples of commercially available products of the aromatic isocyanates include "Lupranate (registered trademark)" MS, "Lupranate (registered trademark)" MI, "Lupranate (registered trademark)" M20S, "Lupranate (registered trademark)" M11S, "Lupranate (registered trademark)" M5S, "Lupranate (registered trademark)" T-80, "Lupranate (registered trademark)" MM-103, "Lupranate (registered trademark)" MM-102, "Lupranate (registered trademark)" MM-301 (the above are manufactured by BASF INOAC Polyurethanes Ltd.), "Millionate (registered trademark)" MT, "Millionate (registered trademark)" MT-F, "Millionate (registered trademark)" MT-NBP, "Millionate (registered trademark)" NM, "Millionate (registered trademark)" MR-100, "Millionate (registered trademark)" MR-200, "Millionate (registered trademark)" MR-400, "Coronate (registered trademark)" T-80, "Coronate (registered trademark)" T-65, "Coronate (registered trademark)" T-100 (the above are manufactured by Tosoh Corporation), "Cosmonate (registered trademark)" PH, "Cosmonate (registered trademark)" M-50, and "Cosmonate (registered trademark)" T-80 (manufactured by Mitsui Fine Chemicals, Inc.).

Examples of commercially available products of the alicyclic isocyanates include "Takenate (registered trademark)" 600 and "Fortimo (registered trademark)" 1,4-H6XDI (the above are manufactured by Mitsui Chemicals, Inc.).

The epoxy resin and any one of these epoxy resin curing agents, or a product obtained by causing the two to partially react preliminarily with each other may be incorporated into the composition. This manner is, in some cases, effective for adjusting the viscosity of the composition or improving the composition in storage stability.

The epoxy resin composition used in the present invention is required to contain a catalyst [C]. Such a catalyst includes a compound capable of accelerating a curing reaction between the oxirane group of [A] and the isocyanate group of [B]. By containing such a catalyst, productivity is excellent, and a highly active and highly selective oxazolidone cyclization reaction proceeds, so that balanced mechanical properties of material can be exhibited.

The catalyst used in the present invention is not particularly limited, but a basic catalyst is preferably used, and amines or derivatives or ammonium salts thereof, or imidazoles or derivatives or imidazolium salts thereof are more preferably used. These catalysts may be used alone or in combination of two or more.

When the molding material for fiber-reinforced composite material of the present invention is cured while raising the temperature from 30°C at 10°C/min, it is preferable that a specific degree of cure X, at which the absorbance ratio Da/(Da + Db) at the degree of cure X is in the range of 0.4 to 1, is present in the range of 85 to 95%. That is, when curing is performed while raising the temperature from 30°C at 10°C/min, the absorbance ratio Da/(Da + Db) at a degree of cure X of any value in the range of 85 to 95% (such as a degree of cure of 90%) is preferably in the range of 0.4 to 1.

The absorbance ratio described here means a value calculated by an absorbance ratio Da/(Da + Db) from an absorbance Da of absorption attributable to the C=O double bond of the carboxyl group of the oxazolidone ring and an absorbance Db of absorption attributable to the C=O double bond of the carboxyl group of the isocyanurate ring in a cured product of an epoxy resin composition using FT-IR of attenuated total reflection (total reflection measurement method, hereinafter may be simply referred to as the "ATR method"). For example, when measurement is performed at a resolution of 4 cm$^{-1}$ and a number of integrations of 32 times by FT-IR (ATR method), the absorbance ratio can be calculated from the absorbance of absorption at around 1,760 cm$^{-1}$ as Da and the absorbance of absorption at around 1,710 cm$^{-1}$ as Db.

When the absorbance ratio Da/(Da + Db) at the specific degree of cure X is preferably in the range of 0.4 to 1, more preferably in the range of 0.5 to 1, further preferably in the range of 0.7 to 1, a structure having few crosslinking points is formed while heat resistance is maintained, and a cured product having high strength and high toughness is easily obtained. It is to be noted that the closer the absorbance ratio Da/(Da + Db) is to 1, the lower the crosslinking tends to be and the more excellent the heat resistance tends to be, which is preferable. Examples of means for setting the absorbance ratio Da/(Da + Db) within the above range include a method of increasing the content of the constituent element [A] and a method of increasing the curing temperature.

When the epoxy resin composition used in the present invention is cured while raising the temperature from 30°C at 10°C/min, it is preferable that a specific degree of cure Y, at which the absorbance ratio Da/(Da + Db) at the degree of cure Y is in the range of 0.01 to 1, is present in the range of 15 to 25%. Examples of means for setting the degree of cure Y within the above range include a method of increasing the content of the constituent element [A] and a method of increasing the curing temperature. That is, when curing is performed while raising the temperature from 30°C at 10°C/min, the absorbance ratio Da/(Da + Db) at a degree of cure Y of any value in the range of 15 to 25% (such as a degree of cure of 20%) is preferably in the range of 0.01 to 1.

When the absorbance ratio Da/(Da + Db) at the specific degree of cure Y is in the range of 0.01 to 1, preferably in the range of 0.05 to 1, more preferably in the range of 0.1 to 1, it is possible to suppress a reaction in which the number of crosslinking points that is formed earlier is likely to increase, and the resulting fiber-reinforced composite material is less likely to be brittle. In addition, since significant thickening in the initial stage of curing can be avoided, the surface quality is further improved.

In the second preferable aspect of the molding material for fiber-reinforced composite material of the present invention, high bending strength can be exhibited in the resulting fiber-reinforced composite material by using a specific glass fiber and an epoxy resin composition in combination. In general, the bending strength is a value calculated from a relationship between strain and stress when a rectangular parallelepiped test piece is horizontally placed, both ends of the test piece are supported, and a central portion is compressed by an indenter and represents stress at which a crack or a fracture occurs with respect to a bending load. Examples of a place where fracture occurs when a bending load is applied to the fiber-reinforced composite material include an interface between the fiber and the resin and the inside of the resin. When interfacial adhesion between the fiber and the resin is strong or the resin is brittle, fracture occurs in the inside of the resin (cohesive failure). On the other hand, when interfacial adhesion between the fiber and the resin is low or the resin is strong, fracture occurs at the interface between the fiber and the resin (adhesive failure). That is, the bending strength can be an index representing both interfacial adhesion between the fiber and the resin and the strength of the resin itself.

In the second preferable aspect of the molding material for fiber-reinforced composite material of the present invention, to achieve excellent adhesiveness at the interface between the glass fiber and the epoxy resin composition and high bending strength of the epoxy resin composition itself, the bending strength in a bending test using a strip-shaped test piece (length: 60 mm, width: 10 mm, thickness: 2 mm) having a degree of cure of any value in the range of 85 to 95% (such as a degree of cure of 90%) is preferably 250 MPa or more, more preferably 260 MPa or more, still more preferably 270 MPa or more. The upper limit of the bending strength is not particularly limited but is, for example, 1,000 MPa. Therefore, in the molding material for fiber-reinforced composite material of the present invention, the bending strength is, for example, 250 to 1,000 MPa, 260 to 1,000 MPa, 270 to 1,000 MPa, or the like. Examples of the means for setting the bending strength within the above range include a method of changing the type of the silane coupling agent, the concentration of the silane coupling agent solution, and the immersion time in the silane coupling agent solution and a method of using those having an aromatic structure as the constituent elements [A] and [B].

In the second preferable aspect of the molding material for fiber-reinforced composite material of the present invention, since both the glass fiber and the epoxy resin composition have low water absorbability, it is possible to suppress a decrease in bending strength before and after water absorption. The retention rate of bending strength is preferably 75% or more, more preferably 80% or more, still more preferably 85% or more, the retention rate being obtained from a bending test performed after immersing a strip-shaped test piece (length: 60 mm, width: 10 mm, thickness: 2 mm) having a degree of cure of 85 to 95% (such as a degree of cure of 90%) in a thermostatic water bath at 98°C for 48 hours. Since the retention rate of the bending strength after water absorption is excellent, it can be preferably used for applications such as blades for windmill generators, which are used outdoors for a long period of time.

The bending test in the second preferable aspect of the molding material for fiber-reinforced composite material of the present invention is performed in accordance with JIS K 7171-1994 except that the length of the test piece is changed to 60 mm and the thickness is changed to 2 mm.

The excellent adhesiveness at the interface between the glass fiber and the epoxy resin composition in the second preferable aspect of the molding material for fiber-reinforced composite material of the present invention can also be evaluated by the resin adhesion amount on the surface of the glass fiber exposed on the fracture surface of the test piece after the bending test. When the adhesiveness at the interface between the glass fiber and the epoxy resin composition is excellent, the fracture mode in the bending test is not adhesive failure but cohesive failure, and a large amount of resin adheres to the surface of the glass fiber exposed on the fracture surface of the test piece after the bending test. On the other hand, when the adhesiveness at the interface between the glass fiber and the epoxy resin composition is insufficient, the fracture mode in the bending test is not cohesive failure but adhesive failure, and the amount of resin adhering to the surface of the glass fiber exposed on the fracture surface of the test piece after the bending test is small.

The resin adhesion amount on the surface of the glass fiber exposed on the fracture surface of the test piece after the bending test (in accordance with JIS K 7171-1994) in the second preferable aspect of the molding material for fiber-reinforced composite material of the present invention can be determined by calculating the area ratio of the portion displayed in white when the silicon element is displayed in white and the carbon element is displayed in black in the element mapping image obtained by observing the entire fracture surface of the test piece by scanning electromicroscope-energy dispersive X-ray spectroscopy (SEM-EDX) using image analysis software (Image-Pro Plus Ver 3.0 manufactured by Media Cybernetics, Inc.). As the area ratio of the silicon element increases, a larger amount of the silicon element on the surface of the glass fiber is detected, which means that the surface of the glass fiber is exposed and that no resin is attached. The "entire fracture surface" of the observed test piece means that both of the fracture surfaces of a test piece 1 and a test piece 2 when the test piece is fractured and divided into the test piece 1 and the test piece 2 are observed (corresponding to a width of 10 mm × a thickness of 4 mm).

When the resin adhesion amount on the surface of the glass fiber exposed at the fracture surface of the test piece after the bending test (in accordance with JIS K 7171-1994) in the second preferable aspect of the molding material for fiber-reinforced composite material of the present invention is determined, the following (Formula 1) can be used.

$$S1 = S/(Vf/100) \ ... \ (Formula \ 1)$$

S1: Area ratio of silicon element on glass fiber surface
S: Area ratio of silicon element in entire fracture surface
Vf: Fiber volume fraction (%) in glass fiber-reinforced composite material

For example, when the Vf of the glass fiber-reinforced composite material is 18% and the area ratio of the silicon element in the entire fracture surface is 0.15, the area ratio of the silicon element on the surface of the glass fiber is S1 = 0.15/(18/100) = 0.83. In the second aspect of the molding material for fiber-reinforced composite material of the present invention, the area ratio (S1) of the silicon element on the surface of the glass fiber in the element mapping image obtained when the fracture surface after the bending test (in accordance with JIS K 7171-1994) is observed by scanning electromicroscope-energy dispersive X-ray spectroscopy (SEM-EDX) is preferably in the range of 0 to 0.90, more preferably in the range of 0 to 0.85, still more preferably in the range of 0 to 0.80, because of excellent adhesiveness between the glass fiber and the epoxy resin composition. Examples of the means for setting the area ratio (S1) of the silicon element within the above range include a method of changing the type of the silane coupling agent, the concentration of the silane coupling agent solution, and the immersion time in the silane coupling agent solution.

The first aspect of the fiber-reinforced composite material of the present invention is obtained by curing the molding material for fiber-reinforced composite material of the present invention.

A second aspect of the fiber-reinforced composite material of the present invention includes a cured epoxy resin containing 1 mmol/g or more of oxazolidone rings and carbon fiber satisfying the following conditions [a] and [b] :

[a] the cross-section is substantially perfectly circular, and
[b] the average fiber diameter is in the range of 4.0 to 8.0 $\mu$m.

A third aspect of the fiber-reinforced composite material of the present invention includes: a cured epoxy resin containing 1 mmol/g or more of oxazolidone rings; and glass fiber having a surface functional group covalently bonded to an isocyanate group in the cured epoxy resin, in which the area ratio (S1) of the silicon element on the surface of the glass fiber in an element mapping image obtained when a fracture surface after a bending test (in accordance with JIS K 7171-1994) described in the specification is observed by scanning electromicroscope-energy dispersive X-ray spectroscopy (SEM-EDX) is in the range of 0 to 0.9.

The epoxy resin composition to be used in the present invention is characterized in that an initial viscosity increase is small, an injectable time is long, and curing can be performed in a short time. Therefore, it is most suitable for the RTM method in which the mold temperature from injection to demolding is kept constant, but it can be applied to any molding method using a liquid thermosetting resin, such as the RTM method in which the temperature is raised and the resin is cured after resin injection, hand lay-up, pultrusion, and filament winding other than the RTM method, and any molding method is effective for shortening the molding time and improving the impregnating property into reinforcing fibers. Examples of other molding methods include a vacuum bag method in which a reinforcing-fiber base material is stacked and molded while being impregnated with a varnish, a flexible die for applying pressure is put on the product, and the airtightly sealed material is vacuum (reduced pressure) molded, and a press method in which a molding material for fiber-reinforced composite material (such as a sheet molding compound (SMC)) obtained by forming an epoxy resin composition containing a reinforcing fiber in a sheet shape in advance is compression-molded with a die.

As a method for producing the molding material for fiber-reinforced composite material and the fiber-reinforced composite material of the present invention, the above-described RTM method will be described in more detail as an example. Examples of the method include a method in which the heated epoxy resin composition is injected into a base material made of the reinforcing fiber disposed in a heated molding die and impregnated to produce a molding material for fiber-reinforced composite material, and the molding material is cured in the molding die to produce a fiber-reinforced composite material.

The temperature at which the epoxy resin composition is heated is determined from the relationship between the initial viscosity and the viscosity increase of the epoxy resin composition from the viewpoint of the impregnating property into the substrate made of the reinforcing fiber. Specifically, the temperature at which the epoxy resin composition is heated is preferably 30 to 100°C, more preferably 40 to 80°C.

The molding temperature (heat curing temperature) of the epoxy resin composition is preferably in the range of 100 to 200°C, more preferably in the range of 120 to 180°C. Within the above-mentioned range, it is possible to reduce the time required for curing while avoiding significant thickening at the initial stage of curing and, at the same time, lessen the thermal shrinkage after demolding so that a fiber-reinforced composite material having good surface quality can be obtained. In addition, since the absorbance ratio $Da/(Da + Db)$ of the cured product of the epoxy resin composition is increased, a fiber-reinforced composite material excellent in the balance between toughness and heat resistance can be obtained.

Furthermore, in the molding method, it is preferable to select an appropriate condition depending on the fiber-reinforced composite material to be obtained because the degree of freedom to cope with various shapes and sizes of molded articles can be obtained. For example, it is preferable to use a mold having a plurality of injection ports and inject the epoxy resin composition from the plurality of injection ports at the same time or sequentially with a time difference. The number and the shape of the injection ports are not limited, and the larger the number is, the more preferable the mold is because injection in a short time is possible. The arrangement is preferable in which the resin flow length can be shortened in accordance with the shape of the molded article.

The injection pressure at the time of injecting the epoxy resin composition is usually 0.1 to 1.0 MPa and is preferably 0.1 to 0.6 MPa from the viewpoint of injection time and economic efficiency of equipment. A vacuum-assisted resin transfer molding (VaRTM) method can also be used in which the epoxy resin composition is injected by vacuum suction in the mold. Even in the case of pressure injection, the inside of the mold is preferably subjected to vacuum suction before injecting the epoxy resin composition because formation of a void can be suppressed.

When the resin adhesion amount on the surface of the glass fiber exposed at the fracture surface of the test piece after the bending test (in accordance with JIS K 7171-1994) in the third aspect of the fiber-reinforced composite material of the present invention is determined, the above (Formula 1) can also be used. In the third aspect of the fiber-reinforced composite material of the present invention, the area ratio (S1) of the silicon element on the surface of the glass fiber is 0 to 0.90, preferably 0 to 0.85, more preferably 0 to 0.80, because of excellent adhesiveness between the glass fiber and the epoxy resin composition. Means for setting the area ratio (S1) of the silicon element within the above range is as described above.

In the fiber-reinforced composite material of the present invention, the absorbance ratio $Da/(Da + Db)$ is preferably in the range of 0.4 to 1, more preferably in the range of 0.5 to 1, still more preferably in the range of 0.7 to 1. When the absorbance ratio $Da/(Da + Db)$ is lower than 0.4, the number of crosslinking points is too large, and the strength and toughness are reduced. It is to be noted that the closer the absorbance ratio $Da/(Da + Db)$ is to 1, the lower the crosslinking tends to be and the more excellent the heat resistance tends to be, which is preferable.

The absorbance ratio described here is specified by calculating the absorbance ratio $= Da/(Da + Db)$ from the absorbance $Da$ of absorption attributable to the C=O double bond of the carboxyl group of the oxazolidone ring and the absorbance $Db$ of absorption attributable to the C=O double bond of the carboxyl group of the isocyanurate ring in FT-IR (ATR method). The absorbance ratio $Da/(Da + Db)$ of a fiber-reinforced composite material obtained by curing a molding material for fiber-reinforced composite material containing an epoxy resin composition and a reinforcing fiber to a specific degree of cure is substantially equal to the absorbance ratio $Da/(Da + Db)$ of a cured product of the epoxy resin composition at the specific degree of cure, and in the present invention, the absorbance ratio of the cured product of the epoxy resin composition at a specific degree of cure may be regarded as the absorbance ratio of the fiber-reinforced composite material at the specific degree of cure.

In the present invention, the degree of cure of a fiber-reinforced composite material obtained by curing a molding material for fiber-reinforced composite material containing an epoxy resin composition and a reinforcing fiber is equal to the degree of cure of a cured product of the epoxy resin composition contained in the fiber-reinforced composite material.

For the fiber-reinforced composite material of the present invention to have a high specific strength or specific elastic modulus, the fiber volume fraction Vf thereof is preferably in the range of 40 to 85%, more preferably in the range of 45 to 85%, when the reinforcing fiber is carbon fiber. When the reinforcing fiber is glass fiber, the fraction is preferably in the range of 15 to 85%, more preferably in the range of 20 to 80%. The fiber volume fraction Vf of the fiber-reinforced composite material referred herein is a value defined as below and measured in conformity with ASTM D3171: 1999 and refers to a value in a state after the epoxy resin composition is injected into a base material made of the reinforcing fiber and is cured. That is, the fiber volume fraction Vf of the fiber-reinforced composite material can be calculated from the following (Formula 2) with a thickness h of the fiber-reinforced composite material.

$$Vf\ (\%)\ =\ (Af\ \times\ N)/(\rho f\ \times\ h)/10\ ...\ \ (Formula\ 2)$$

Af: Mass per 1 $m^2$ of one sheet of base material made of reinforcing fiber (g/$m^2$)
N: Number of laminated base materials made of reinforcing fiber (number)
pf: Density (g/$cm^3$) of reinforcing fiber
h: Thickness (mm) of fiber-reinforced composite material (test piece)

In order to specify the mass Af per 1 $m^2$ of a sheet of the base material made of the reinforcing fiber, the number N of laminated base materials made of the reinforcing fiber, and the density pf of the reinforcing fiber from the fiber-reinforced composite material, the base material made of the reinforcing fiber is separated and taken out from the fiber-reinforced composite material by any one of a combustion method, a nitric acid decomposition method, and a sulfuric acid decomposition method based on JIS K 7075: 1991. As the density of the reinforcing fiber to be used in this case, a value measured according to JIS R 7603: 1999 is used.

The thickness h of the fiber-reinforced composite material is preferably measured using a micrometer as specified in JIS B 7502: 1994 or any other device with equivalent or greater accuracy as described in JIS K 7072: 1991. When the fiber-reinforced composite material has a complex shape that makes the measurement difficult, a sample (sample having a shape and a size that are enough for the measurement) may be cut out from the fiber-reinforced composite material and measured.

As another method for calculating the fiber volume fraction (Vf), there is also a method of heating a fiber-reinforced composite material in an electric furnace or the like to burn off organic substances such as a matrix resin. For example, several grams of a test piece is cut out from the fiber-reinforced composite material, the mass of the test piece is measured, then the test piece is heated in an electric furnace heated to 500°C for 1 hour to burn off organic substances such as a matrix resin, the test piece is cooled to room temperature, and then the mass of the remaining reinforcing fiber is measured. The volume fraction of the reinforcing fiber can be measured by measuring the ratio of the mass of the reinforcing fiber to the mass of the sample before burning off organic substances such as the matrix resin and determining the volumes of the matrix resin and the glass fiber from the densities thereof.

One of preferable forms of the fiber-reinforced composite material of the present invention is a single plate. In addition, examples of another preferable form include a sandwich structure in which a single plate-shaped fiber-reinforced composite material is disposed on both surfaces of a core material, a hollow structure in which the periphery is covered with a single plate-shaped structure, and what is called a canapé structure in which a single plate-shaped fiber-reinforced composite material is disposed on one surface of a core material.

Examples of the core material of the sandwich structure and the canapé structure include a honeycomb core made of aluminum or aramid, a foam core made of polyurethane, polystyrene, polyamide, polyimide, polyvinyl chloride, a phenol resin, an acrylic resin, an epoxy resin, or the like, and wood such as balsa. Among them, a foam core is preferably used as the core material because a lightweight fiber-reinforced composite material is obtained.

The second aspect and the third aspect of the fiber-reinforced composite material of the present invention include a cured epoxy resin containing 1 mmol/g or more of oxazolidone rings. The content of the oxazolidone ring in the cured epoxy resin is preferably 1.5 mmol/g or more, more preferably 2 mmol/g or more. The upper limit of the content is not particularly limited but is generally about 10 mmol/g. When the content is within the above range, excellent balance of mechanical properties is exhibited. The content of the oxazolidone ring can be calculated, for example, from the result obtained by infrared spectroscopy (IR). Examples of means for setting the content of the oxazolidone ring within the above range include a method of increasing the content of the constituent element [A] and a method of increasing the curing temperature.

In the present invention, only after combining the carbon fiber and the epoxy resin composition, a fiber-reinforced composite material excellent in impact resistance and tensile strength can be obtained. The isocyanate group contained in the epoxy resin composition has high reactivity with functional groups such as the hydroxyl group and efficiently reacts with functional groups such as the hydroxyl group on the surface of the carbon fiber when the epoxy resin composition is cured. That is, even when carbon fiber generally having low adhesiveness is used, good adhesiveness with a matrix resin is exhibited, and it is possible to obtain a fiber-reinforced composite material having both impact resistance and tensile strength at a high level. Only after combining the glass fiber and the epoxy resin composition, a fiber-reinforced composite material excellent in bending strength, impact resistance, and weather resistance can be obtained. The isocyanate group contained in the epoxy resin composition has high reactivity with functional groups such as the amino group and efficiently reacts with surface functional groups present on the surface of the glass fiber when the epoxy resin composition is cured. That is, moderate adhesiveness between the glass fiber and the matrix resin is exhibited, and a fiber-reinforced composite material excellent in bending strength, impact resistance, and weather resistance can be obtained.

EXAMPLES

The present invention will be described below in more detail with reference to examples. However, the present invention is not limited by the examples.

Examples 1 to 7 and Comparative Examples 1 to 6 are as follows (including Table 1 and Table 2).

(1) Measurement of surface oxygen concentration O/C of carbon fiber

The surface oxygen concentration O/C was determined by X-ray photoelectron spectroscopy according to the following procedure.

First, a sizing agent and the like were removed from a carbon fiber bundle to be measured with a solvent, the carbon fiber bundle was cut into about 5 mm, the carbon fiber bundle was spread and arranged on a stainless steel sample holder, and then measurement was performed under the following conditions.

- Photoelectron escape angle: 90 degrees, - X-ray source: $MgK\alpha1,2$
- Degree of vacuum in sample chamber: $1 \times 10^{-8}$ Torr

Next, a binding energy value B. E. of the main peak of $C_{1S}$ was adjusted to 284.6 eV to correct a peak associated with electrification during the measurement.

Next, the $C_{1s}$ peak area $[O_{1s}]$ was obtained by drawing a straight baseline within the range of 282 to 296 eV, and the $O_{1s}$ peak area $[C_{1s}]$ was obtained by drawing a straight baseline within the range of 528 to 540 eV.

The surface oxygen concentration O/C was determined from the ratio of the $O_{1s}$ peak area $[O_{1s}]$ and the $C_{1s}$ peak area $[C_{1s}]$ and the sensitivity correction value unique to the device by the following formula.

$$\text{O/C} = ([O_{1s}]/[C_{1s}])/(\text{sensitivity correction value})$$

Here, ESCA-750 manufactured by Shimadzu Corporation was used as a measuring device, and the sensitivity correction value unique to the device was set to 2.85. The number of test samples was n = 3, and the average value thereof was adopted.

(2) Measurement of Average Fiber Diameter of Carbon Fiber

A carbon fiber bundle was embedded in an embedding epoxy resin and polished in a direction orthogonal to the fiber using a sandpaper, and then a cross-section was observed with an optical microscope at a magnification of 1,000 times. In the visual field, 20 filaments were randomly selected, their major axes R and minor axes r were measured, the respective average values were calculated, and {(average value of R) + (average value of r)}/2 was defined as the average fiber diameter. When (average value of r)/(average value of R) was more than 0.9, it was determined that the shape was substantially perfectly circular.

(3) Production of Carbon Fiber

Carbon fibers [I] to [V] were produced by the following production method.

<Carbon Fiber (I)>

Using a copolymer composed of 99.4 mol% of acrylonitrile and 0.6 mol% of methacrylic acid, an acrylic precursor fiber having a single fiber fineness of 0.08 tex and the number of filaments of 12,000 was obtained by a dry-wet spinning method.

The precursor fiber was heated at a stretch ratio of 1.05 at 240 to 280°C in the air to be converted into a flame resistant fiber, further heated at a stretch ratio of 1.10 at a temperature ramp rate of 200°C/min in a temperature region of 300 to 900°C in a nitrogen atmosphere, and then fired to 1400°C to advance carbonization. The obtained carbon fiber had a fiber areal weight of 0.50 g/m and a density of 1.80 $g/cm^3$.

Next, electrolytic oxidation was performed using an ammonium hydrogen carbonate aqueous solution having a concentration of 1.0 mol/L as an electrolytic solution in a tank having a quantity of electricity of 3 C/g tank. Next, the carbon fiber after the electrolytic oxidation was washed with water and dried in the air at 150°C to provide the carbon fiber [I].

The carbon fiber [I] had a surface oxygen concentration O/C of 0.08, an average fiber diameter of 5.5 $\mu$m, and a cross-sectional shape of r/R of 0.95, which indicated substantially a perfect circle.

<Carbon Fiber (II)>

The carbon fiber [II] was obtained through production under the same conditions as for the carbon fiber [I] except that the quantity of electricity at the time of electrolytic oxidation was changed to a 30-C/g tank.

The carbon fiber [II] had a surface oxygen concentration O/C of 0.18, an average fiber diameter of 5.5 $\mu$m, and a cross-sectional shape of r/R of 0.95, which indicated substantially a perfect circle.

<Carbon Fiber (III)>

The carbon fiber [III] was obtained through production under the same conditions as for the carbon fiber [I] except that the quantity of electricity at the time of electrolytic oxidation was changed to a 1-C/g tank.

The carbon fiber [III] had a surface oxygen concentration O/C of 0.03, an average fiber diameter of 5.5 $\mu$m, and a cross-sectional shape of r/R of 0.95, which indicated substantially a perfect circle.

<Carbon Fiber (IV)>

The carbon fiber [IV] was obtained through production under the same conditions as for the carbon fiber [I] except that the quantity of electricity at the time of electrolytic oxidation was changed to a 100-C/g tank.

The carbon fiber [IV] had a surface oxygen concentration O/C of 0.22, an average fiber diameter of 5.5 $\mu$m, and a cross-sectional shape of r/R of 0.95, which indicated substantially a perfect circle.

<Carbon Fiber (V) >

The carbon fiber [V] was obtained through production under the same conditions as for the carbon fiber [I] except that the spinning method of the acrylic precursor fiber was changed to the wet spinning method and that the obtained acrylic precursor fiber had a single fiber fineness of 0.09 tex. The obtained carbon fiber had a fiber areal weight of 0.50 g/m and a density of 1.80 g/cm$^3$.

The carbon fiber [V] had a surface oxygen concentration O/C of 0.05, an average fiber diameter of 5.4 $\mu$m, and a cross-sectional shape of r/R of 0.8, which indicated a flat shape.

(4) Production of Carbon Fiber Woven Fabric

Each of the carbon fibers obtained above were aligned as warps to form a one directional sheet-like reinforcing fiber bundle group. Glass fiber ECE 225-1/0 1Z (manufactured by Nitto Boseki Co., Ltd.) used as wefts was arranged at a density of 3 fibers/cm in a direction orthogonal to the one directional sheet-like reinforcing fiber bundle group, and the warps and the wefts were woven so as to cross each other using a loom to provide a carbon fiber woven fabric having an areal weight of 190 g/m$^2$ in which the carbon fiber was substantially arranged in one direction.

(5) Production of Nonwoven Fabric

A nonwoven fabric composed of "UBESTA" (registered trademark) 3014U (Polyamide 12, manufactured by Ube Industries, Ltd.) was produced by the melt blowing method. The areal weight of the resulting nonwoven fabric was 7 g/m$^2$, and the average fiber diameter thereof was 8 $\mu$m.

(6) Production of Cured Epoxy Resin Plate

An epoxy resin composition was defoamed in vacuum, then cast on a preheated plate, and heated from 30°C to a predetermined temperature at 10°C/min using a dynamic viscoelasticity tester (ATD: manufactured by Alpha Technologies LLC) to produce a cured epoxy resin plate.

Here, the predetermined temperature is determined by the measurement described in (7) below.

(7) Measurement of Degree of Cure of Cured Epoxy Resin Plate

On 5 mg of the epoxy resin composition collected, measurement was performed while raising the temperature from 30°C to 350°C at a temperature ramp rate of 10°C/min using a differential scanning calorimeter (DSC 2910: manufactured by TA Instruments) to obtain an exothermic curve, and the exothermic reaction peak was integrated to calculate the total heat value QT of the thermosetting resin. When an exothermic or endothermic peak due to a decomposition reaction or the like was observed, the measurement was performed in a temperature range equal to or lower than the temperature of the peak.

On 10 mg of the cured epoxy resin plate produced in above (6) collected, measurement was performed while raising the temperature from 30°C to 350°C at a temperature ramp rate of 10°C/min using a differential scanning calorimeter (DSC 2910: manufactured by TA Instruments) to obtain an exothermic curve, and the exothermic reaction peak was integrated to calculate the residual heat value QR of the cured epoxy resin. When an exothermic or endothermic peak due to a decomposition reaction or the like was observed, the measurement was performed in a temperature range equal to or lower than the temperature of the peak.

Here, the degree of cure (%) determined using DSC was determined from the following formula: degree of cure (%) = (QT - QR)/QT $\times$ 100.

In addition, from this measurement, the temperatures at which the degree of cure of the epoxy resin composition reached a specific degree of cure X (degree of cure of 90% in this example) and a specific degree of cure Y (degree of cure of 20% in this example) were calculated.

(8) Measurement of Absorbance Ratios at Specific Degrees of Cure X and Y

The cured epoxy resins produced in (6) above at the specific degree of cure X (degree of cure of 90% in this example) and the specific degree of cure Y (degree of cure of 20% in this example) were collected and subjected to FT-IR (ATR method) using an FT-IR apparatus (7000 FT-IR: manufactured by Varian Inc.). As measurement conditions, the resolution was set to 4 cm$^{-1}$, and the number of integrations was set to 32.

The absorbance ratio Da/(Da + Db) was calculated from the absorbance Da of absorption around 1,760 cm$^{-1}$ attributable to the C=O double bond of the carboxyl group of the oxazolidone ring and the absorbance Db of absorption around 1,710 cm$^{-1}$ attributable to the C=O double bond of the carboxyl group of the isocyanurate ring.

(9) Preparation of Epoxy Resin Composition

Resin compositions [i] to [iii] were prepared by the following production method. Materials used here were as follows.

[A] an epoxy resin having at least two oxirane groups in a molecule,

- "jER (registered trademark)" 828 (bisphenol A type epoxy resin, manufactured by Mitsubishi Chemical Corporation)

[B] an epoxy resin curing agent having at least two isocyanate groups in a molecule, and

- "Lupranate (registered trademark)" M20S (manufactured by BASF INOAC Polyurethanes Ltd.)

[C] a catalyst, and

- "DBU (registered trademark)" (1,8-diazabicyclo[5.4.0]undec-7-ene, manufactured by San-Apro Ltd.)
- TMAB (tetramethylammonium bromide, manufactured by Tokyo Chemical Industry Co., Ltd.)

Epoxy resin other than [A]

- 4-tert-Butylphenyl glycidyl ether (manufactured by Tokyo Chemical Industry Co., Ltd.)

Epoxy resin curing agent having an isocyanate group other than [B]

- 2-Phenylethyl isocyanate (manufactured by Tokyo Chemical Industry Co., Ltd.)

Epoxy resin curing agent other than [B]

- 3,3'-DAS (3,3'-diaminodiphenyl sulfone, manufactured by Mitsui Fine Chemicals, Inc.)
- HN-5500 (methyl hexahydrophthalic acid anhydride, manufactured by Hitachi Chemical Co., Ltd.)

<Resin Composition [i]>

A transparent viscous liquid was obtained by kneading 100 parts by mass of "jER (registered trademark)" 828 and 4 parts by mass of "DBU (registered trademark)", then 72 parts by mass of "Lupranate (registered trademark)" M20S was added thereto, and the mixture was further kneaded to provide an epoxy resin composition.

When the resin composition [i] was cured while raising the temperature from 30°C at 10°C/min, the absorbance ratio Da/(Da + Db) at a degree of cure of 20% was 0.13, and the absorbance ratio Da/(Da + Db) at a degree of cure of 90% was 0.71.

<Resin Composition [ii]>

A transparent viscous liquid was obtained by kneading 100 parts by mass of 4-tert-butylphenyl glycidyl ether and 4 parts by mass of "DBU (registered trademark)", then 66 parts by mass of "Lupranate (registered trademark)" M20S was added thereto, and the mixture was further kneaded to provide an epoxy resin composition.

When the resin composition [ii] was cured while raising the temperature from 30°C at 10°C/min, the absorbance ratio Da/(Da + Db) at a degree of cure of 20% was 0.06, and the absorbance ratio Da/(Da + Db) at a degree of cure of 90% was 0.19.

<Resin Composition [iii]>

A transparent viscous liquid was obtained by kneading 100 parts by mass of "jER (registered trademark)" 828 and 4 parts by mass of "DBU (registered trademark)", then 78 parts by mass of 2-phenylethyl isocyanate was added thereto, and the mixture was further kneaded to provide an epoxy resin composition.

When the resin composition [iii] was cured while raising the temperature from 30°C at 10°C/min, the absorbance ratio Da/(Da + Db) at a degree of cure of 20% was 0.06, and the absorbance ratio Da/(Da + Db) at a degree of cure of 90% was 0.18.

<Resin Composition [iv]>

An epoxy resin composition was obtained by kneading 100 parts by mass of "jER (registered trademark)" 828 and 72 parts by mass of "Lupranate (registered trademark)" M20S.

The resin composition [iv] was heated from 30°C at 10°C/min, but a cured product having a degree of cure of 90% was not obtained.

<Resin Composition [v]>

An epoxy resin composition was obtained by kneading 100 parts by mass of "jER (registered trademark)" 828 and 33 parts by mass of 3,3'-DAS.

When the resin composition [v] was cured while raising the temperature from 30°C at 10°C/min, the absorbance ratio Da/(Da + Db) at degrees of cure of 20% and 90% was 0.

<Resin Composition [vi]>

A transparent curing agent solution was obtained by kneading 89 parts by mass of HN-5500 and 6 parts by mass of TMAB at 80°C. The solution was added to 100 parts by mass of "jER (registered trademark)" 828, and the mixture was further kneaded to provide an epoxy resin composition.

When the resin composition [vi] was cured while raising the temperature from 30°C at 10°C/min, the absorbance ratio Da/(Da + Db) at degrees of cure of 20% and 90% was 0.

(10) Production of Fiber-Reinforced Composite

Material and Measurement of Compression Strength after Impact

In a mold having a plate cavity of 400 mm × 400 mm × 4.8 mm, 12 sheets of the above carbon fiber woven fabric cut out into a size of 395 mm × 395 mm were laminated by repeating (45°/0°/-45°/90°) for 3 times while sandwiching a nonwoven fabric every other sheet with the carbon fiber direction set to 0°, and 12 sheets laminated by repeating (90°/-45°/0°/45°) for 3 times while sandwiching a nonwoven fabric every other sheet were set thereon, and the mold was clamped with a press device. Next, the injection temperature was maintained at a predetermined injection temperature, the pressure was reduced to atmospheric pressure - 0.1 MPa with a vacuum pump, and the epoxy resin composition heated to a predetermined injection temperature in advance was injected at a pressure of 0.2 MPa. The temperature was raised to a predetermined curing temperature at 5°C/min, the mold was opened after a lapse of a predetermined curing time, and demolding was performed to provide a fiber-reinforced composite material.

The compression strength after impact of the obtained fiber-reinforced composite material was measured in accordance with JIS K 7089: 1996.

(11) Production of Fiber-Reinforced Composite Material and Measurement of Tensile Breaking Strength

In a mold having a plate cavity of 400 mm × 400 mm × 1.2 mm, 6 sheets of the above carbon fiber woven fabric cut into a size of 395 mm × 395 mm laminated while sandwiching a nonwoven fabric every other sheet with the carbon fiber directions aligned was set, and the mold was clamped with a press device. Next, the injection temperature was maintained at a predetermined injection temperature, the pressure was reduced to atmospheric pressure - 0.1 MPa with a vacuum pump, and the epoxy resin composition heated to a predetermined injection temperature in advance was injected at a pressure of 0.2 MPa. The temperature was raised to a predetermined curing temperature at 5°C/min, the mold was opened after a lapse of a predetermined curing time, and demolding was performed to provide a fiber-reinforced composite material.

The tensile breaking strength of the obtained fiber-reinforced composite material was measured in accordance with ASTM D3039.

(12) Resin Impregnating Property into Reinforcing Fiber

With regard to the impregnating property in the resin injection step during the production of the fiber-reinforced composite material in (10) above, comparative evaluation was carried out on the basis of the following three grades with reference to the amount of void in the fiber-reinforced composite material. Such an impregnating property that the amount of void in a fiber-reinforced composite material was less than 1%, that is, void was substantially not present, was rated as "Good", such an impregnating property that a not-resin-impregnated portion was not recognized in the external appearance of a fiber-reinforced composite material but the amount of void in the fiber-reinforced composite material was 1% or more was rated as "Fair", and such an impregnating property that a not-resin-impregnated portion was recognized in the external appearance of a fiber-reinforced composite material was rated as "Bad".

The amount of void in the fiber-reinforced composite material was calculated from an area ratio of the void in the fiber-reinforced composite material in the observation of a smoothly polished fiber-reinforced composite material cross-section under an oblique optical microscope.

(Examples 1 to 4)

Using [I] as the carbon fiber and [i] as the epoxy resin composition, fiber-reinforced composite materials were produced under the curing conditions shown in Table 1. In any case, both the compression strength after impact and the tensile breaking strength of the obtained fiber-reinforced composite material were excellent. In addition, a not-resin-impregnated portion and voids were not observed, which indicated that the impregnating property was excellent.

(Example 5)

A fiber-reinforced composite material was produced in the same manner as in Example 4 except that [II] was used as the carbon fiber. The obtained fiber-reinforced composite material showed excellent compression strength after impact and tensile breaking strength at an acceptable level. In addition, a not-resin-impregnated portion and voids were not observed, which indicated that the impregnating property was excellent.

(Example 6)

A fiber-reinforced composite material was produced in the same manner as in Example 4 except that [III] was used as the carbon fiber. The obtained fiber-reinforced composite material showed compression strength after impact at an acceptable level and excellent tensile breaking strength. In addition, a not-resin-impregnated portion and voids were not observed, which indicated that the impregnating property was excellent.

(Example 7)

A fiber-reinforced composite material was produced in the same manner as in Example 4 except that [IV] was used as the carbon fiber. The obtained fiber-reinforced composite material showed excellent compression strength after impact and tensile breaking strength at an acceptable level. In addition, a not-resin-impregnated portion and voids were not observed, which indicated that the impregnating property was excellent.

(Comparative Example 1)

A fiber-reinforced composite material was produced in the same manner as in Example 4 except that [V] was used as the carbon fiber. Since the carbon fiber having a flat cross-sectional shape was used, the obtained fiber-reinforced composite material had slightly poor compression strength after impact and poor tensile breaking strength. In addition, it took time to inject the resin composition, and voids were observed in a cross-section of the obtained fiber-reinforced composite material.

(Comparative Example 2)

A fiber-reinforced composite material was produced in the same manner as in Example 4 except that [ii] was used as the epoxy resin composition. Since the monofunctional epoxy resin was used, the compression strength after impact and the tensile breaking strength were significantly poor. There was also a problem in the impregnating property.

(Comparative Example 3)

A fiber-reinforced composite material was produced in the same manner as in Example 4 except that [iii] was used as the epoxy resin composition. Since the monofunctional isocyanate was used, the compression strength after impact and the tensile breaking strength were significantly poor. There was also a problem in the impregnating property.

(Comparative Example 4)

Although [iv] was used as the epoxy resin composition, a cured product having a degree of cure of 90% was not obtained under the curing conditions shown in Table 2.

(Comparative Example 5)

Using [I] as the carbon fiber and [v] as the epoxy resin composition, a fiber-reinforced composite material was produced under the curing conditions shown in Table 1. The oxazolidone ring was not formed in the obtained fiber-reinforced composite material, and the compression strength after impact was poor. In addition, it took time to inject the resin composition, and voids were observed in a cross-section of the obtained fiber-reinforced composite material.

(Comparative Example 6)

Using [I] as the carbon fiber and [vi] as the epoxy resin composition, a fiber-reinforced composite material was produced under the curing conditions shown in Table 1. The oxazolidone ring was not formed in the obtained fiber-reinforced composite material, and the compression strength after impact was poor.

[Table 1]

| | Example 1 | Example 2 | Example 3 | Example 4 | Example 5 | Example 6 | Example 7 |
|---|---|---|---|---|---|---|---|
| Carbon fiber | [I] | [I] | [I] | [I] | [II] | [III] | [IV] |
| Epoxy resin composition | [i] | [i] | [i] | [i] | [i] | [i] | [i] |
| Injection temperature | 80°C | 80°C | 80°C | 80°C | 80°C | 80°C | 80°C |
| Curing condition | 90°C for 120 minutes + 180°C for 120 minutes | 120°C for 120 minutes + 180°C for 120 minutes | 150°C for 120 minutes + 180°C for 120 minutes | 180°C for 240 minutes | 180°C for 240 minutes | 180°C for 240 minutes | 180°C for 240 minutes |

(continued)

| | Example 1 | Example 2 | Example 3 | Example 4 | Example 5 | Example 6 | Example 7 |
|---|---|---|---|---|---|---|---|
| Compression strength after impact [MPa] | 320 | 330 | 340 | 340 | 340 | 310 | 340 |
| Tensile breaking strength (MPa) | 1020 | 1020 | 1010 | 1010 | 920 | 1020 | 890 |
| Da/(Da+Db) [-] | 0.26 | 0.43 | 0.64 | 0.78 | 0.78 | 0.78 | 0.78 |
| Impregnating property | Good | Good | Good | Good | Good | Good | Good |

[Table 2]

| | Comparative Example 1 | Comparative Example 2 | Comparative Example 3 | Comparative Example 4 | Comparative Example 5 | Comparative Example 6 |
|---|---|---|---|---|---|---|
| Carbon fiber | [V] | [I] | [I] | [I] | [I] | [I] |
| Epoxy resin composition | [i] | [ii] | [iii] | [iv] | [v] | [vi] |
| Injection temperature | 80°C | 80°C | 80°C | 80°C | 100°C | 50°C |
| Curing condition | 180°C for 240 minutes | 180°C for 240 minutes | 180°C for 240 minutes | 180°C for 240 minutes | 180°C for 240 minutes | 100°C for 60 minutes |
| Compression strength after impact [MPa] | 300 | 110 | 120 | - | 280 | 260 |
| Tensile breaking strength (MPa) | 780 | 700 | 710 | - | 1040 | 1000 |
| Da/(Da+Db) [-] | 0.78 | 0.15 | 0.15 | - | 0 | 0 |
| Impregnating property | Fair | Fair | Fair | - | Fair | Good |

Examples 8 to 15 and Comparative Examples 7 to 13 are as follows (including Table 3 and Table 4).

(1) Glass Fiber

Glass fibers [I] to [VII] were prepared by the following production method.

<Glass Fiber [I]>

As the glass fiber base material, an untreated cloth of KS7781 (manufactured by Nitto Boseki Co., Ltd., areal weight 303 g/m$^2$, warp density 58 yarns/25 mm, weft density 53 yarns/25 mm) was prepared and cut into a length of 3 mm.

<Glass Fiber [II]>

As the glass fiber base material, an untreated cloth of KS7781 (manufactured by Nitto Boseki Co., Ltd., areal

weight 303 g/m$^2$, warp density 58 yarns/25 mm, weft density 53 yarns/25 mm) was prepared and cut into a length of 3 mm. The cut glass fiber was immersed in a methanol solution (1% by mass) of 3-glycidoxypropyltrimethoxysilane (manufactured by Shin-Etsu Chemical Co., Ltd., trade name: KBM-403) as a coupling agent for 7 hours and then dried in a hot air oven at 110°C for 5 hours to remove the solvent.

<Glass Fiber [III]>

The glass fiber [III] was obtained under the same conditions as those for the glass fiber [II] except that 3-aminopropyltrimethoxysilane (manufactured by Shin-Etsu Chemical Co., Ltd., trade name: KBM-903) was used as the coupling agent.

<Glass Fiber [IV]>

The glass fiber [IV] was obtained under the same conditions as those for the glass fiber [II] except that 3-mercaptopropyltrimethoxysilane (manufactured by Shin-Etsu Chemical Co., Ltd., trade name: KBM-803) was used as the coupling agent.

<Glass Fiber [V]>

The glass fiber [V] was obtained under the same conditions as those for the glass fiber [II] except that 3-trimethoxysilylpropylsuccinic anhydride (manufactured by Shin-Etsu Chemical Co., Ltd., trade name: X-12-967C) was used as the coupling agent.

<Glass Fiber [VI]>

The glass fiber [VI] was obtained under the same conditions as those for the glass fiber [II] except that vinyltrimethoxysilane (manufactured by Shin-Etsu Chemical Co., Ltd., trade name: KBM-1003) was used as the coupling agent.

<Glass Fiber [VII]>

The glass fiber [VII] was obtained under the same conditions as those for the glass fiber [II] except that methyltrimethoxysilane (manufactured by Kanto Chemical Co., Inc.) was used as the coupling agent.

(2) Production of Cured Epoxy Resin Plate

An epoxy resin composition was defoamed in vacuum, then cast on a preheated plate, and heated from 30°C to a predetermined temperature at 10°C/min using a dynamic viscoelasticity tester (ATD: manufactured by Alpha Technologies LLC) to produce a cured epoxy resin plate.

Here, the predetermined temperature is determined by the measurement described in (3) below.

(3) Measurement of Degree of Cure of Cured Epoxy Resin Plate

On 5 mg of the epoxy resin composition collected, measurement was performed while raising the temperature from 30°C to 350°C at a temperature ramp rate of 10°C/min using a differential scanning calorimeter (DSC 2910: manufactured by TA Instruments) to obtain an exothermic curve, and the exothermic reaction peak was integrated to calculate the total heat value QT of the thermosetting resin. When an exothermic or endothermic peak due to a decomposition reaction or the like was observed, the measurement was performed in a temperature range equal to or lower than the temperature of the peak.

On 10 mg of the cured epoxy resin plate produced in above (2) collected, measurement was performed while raising the temperature from 30°C to 350°C at a temperature ramp rate of 10°C/min using a differential scanning calorimeter (DSC 2910: manufactured by TA Instruments) to obtain an exothermic curve, and the exothermic reaction peak was integrated to calculate the residual heat value QR of the cured epoxy resin. When an exothermic or endothermic peak due to a decomposition reaction or the like was observed, the measurement was performed in a temperature range equal to or lower than the temperature of the peak.

Here, the degree of cure (%) determined using DSC was determined from the following formula: degree of cure (%) = (QT - QR)/QT × 100.

In the present example, the degree of cure of the cured epoxy resin plate determined in this way was regarded as being the same value as the degree of cure of a fiber-reinforced composite material containing glass fiber in the cured epoxy resin plate.

In addition, from this measurement, the temperatures at which the degree of cure of the epoxy resin composition reached a specific degree of cure X (degree of cure of 90% in this example) and a specific degree of cure Y (degree of cure of 20% in this example) were calculated.

(4) Measurement of Absorbance Ratios at Specific Degrees of Cure X and Y

The cured epoxy resins produced in (2) above at the specific degree of cure X (degree of cure of 90% in this example) and the specific degree of cure Y (degree of cure of 20% in this example) were collected and subjected to FT-IR (ATR method) using an FT-IR apparatus (7000 FT-IR: manufactured by Varian Inc.). As measurement conditions, the resolution was set to 4 $cm^{-1}$, and the number of integrations was set to 32.

The absorbance ratio Da/(Da + Db) was calculated from the absorbance Da of absorption around 1,760 $cm^{-1}$ attributable to the C=O double bond of the carboxyl group of the oxazolidone ring and the absorbance Db of absorption around 1,710 $cm^{-1}$ attributable to the C=O double bond of the carboxyl group of the isocyanurate ring.

In the present example, the absorbance ratio at a specific degree of cure of the cured epoxy resin plate determined in this way was regarded as being the same value as the absorbance ratio at the specific degree of cure of a fiber-reinforced composite material containing glass fiber in the cured epoxy resin plate.

(5) Preparation of Epoxy Resin Composition

Resin compositions [i] to [vi] were prepared by the following production method. Materials used here were as follows.

[A] an epoxy resin having at least two oxirane groups in a molecule,

- "jER (registered trademark)" 828 (bisphenol A type epoxy resin, manufactured by Mitsubishi Chemical Corporation)

[B] an epoxy resin curing agent having at least two isocyanate groups in a molecule, and

- "Lupranate (registered trademark)" M20S (manufactured by BASF INOAC Polyurethanes Ltd.)

[C] a catalyst, and

- "DBU (registered trademark)" (1,8-diazabicyclo[5.4.0]undec-7-ene, manufactured by San-Apro Ltd.)
- TMAB (tetramethylammonium bromide, manufactured by Tokyo Chemical Industry Co., Ltd.)

Epoxy resin other than [A]

- 4-tert-Butylphenyl glycidyl ether (manufactured by Tokyo Chemical Industry Co., Ltd.)

Epoxy resin curing agent having an isocyanate group other than [B]

- 2-Phenylethyl isocyanate (manufactured by Tokyo Chemical Industry Co., Ltd.)

Epoxy resin curing agent other than [B]

- 3,3'-DAS (3,3'-diaminodiphenyl sulfone, manufactured by Mitsui Fine Chemicals, Inc.)
- HN-5500 (methyl hexahydrophthalic acid anhydride, manufactured by Hitachi Chemical Co., Ltd.)

<Resin Composition [i]>

A transparent viscous liquid was obtained by kneading 100 parts by mass of "jER (registered trademark)" 828 and 4 parts by mass of "DBU (registered trademark)", then 72 parts by mass of "Lupranate (registered trademark)" M20S was added thereto, and the mixture was further kneaded to provide an epoxy resin composition.

When the resin composition [i] was cured while raising the temperature from 30°C at 10°C/min, the absorbance ratio Da/(Da + Db) at a degree of cure of 20% was 0.13, and the absorbance ratio Da/(Da + Db) at a degree of cure of 90% was 0.71.

<Resin Composition [ii]>

A transparent viscous liquid was obtained by kneading 100 parts by mass of 4-tert-butylphenyl glycidyl ether and 4 parts by mass of "DBU (registered trademark)", then 66 parts by mass of "Lupranate (registered trademark)" M20S was added thereto, and the mixture was further kneaded to provide an epoxy resin composition.
When the resin composition [ii] was cured while raising the temperature from 30°C at 10°C/min, the absorbance ratio Da/(Da + Db) at a degree of cure of 20% was 0.06, and the absorbance ratio Da/(Da + Db) at a degree of cure of 90% was 0.19.

<Resin Composition [iii]>

A transparent viscous liquid was obtained by kneading 100 parts by mass of "jER (registered trademark)" 828 and 4 parts by mass of "DBU (registered trademark)", then 78 parts by mass of 2-phenylethyl isocyanate was added thereto, and the mixture was further kneaded to provide an epoxy resin composition.
When the resin composition [iii] was cured while raising the temperature from 30°C at 10°C/min, the absorbance ratio Da/(Da + Db) at a degree of cure of 20% was 0.06, and the absorbance ratio Da/(Da + Db) at a degree of cure of 90% was 0.18.

<Resin Composition [iv]>

An epoxy resin composition was obtained by kneading 100 parts by mass of "jER (registered trademark)" 828 and 72 parts by mass of "Lupranate (registered trademark)" M20S.
The resin composition [iv] was heated from 30°C at 10°C/min, but a cured product having a degree of cure of 90% was not obtained.

<Resin Composition [v]>

An epoxy resin composition was obtained by kneading 100 parts by mass of "jER (registered trademark)" 828 and 33 parts by mass of 3,3'-DAS.
When the resin composition [v] was cured while raising the temperature from 30°C at 10°C/min, the absorbance ratio Da/(Da + Db) at degrees of cure of 20% and 90% was 0.

<Resin Composition [vi]>

A transparent curing agent solution was obtained by kneading 89 parts by mass of HN-5500 and 6 parts by mass of TMAB at 80°C. The solution was added to 100 parts by mass of "jER (registered trademark)" 828, and the mixture was further kneaded to provide an epoxy resin composition.
When the resin composition [vi] was cured while raising the temperature from 30°C at 10°C/min, the absorbance ratio Da/(Da + Db) at degrees of cure of 20% and 90% was 0.

(6) Production of Fiber-Reinforced Composite Material

The glass fiber produced in (1) above and the epoxy resin composition prepared in (5) above were mixed so that the fiber mass fraction (Wf) in the fiber-reinforced composite material was 30%, and the mixture was set in a mold having a plate cavity of 400 mm × 400 mm × 2.4 mm and clamped with a press device. The product was heated to a predetermined curing temperature at 5°C/min, the mold was opened after a lapse of a predetermined curing time, and demolding was performed to provide a fiber-reinforced composite material. The Vf measured in accordance with ASTM D3171: 1999 at this time was 18%.

(7) Measurement of Bending Strength

A strip-shaped test piece having a length of 60 mm and a width of 10 mm was cut out from the fiber-reinforced composite material produced in (6) above, and three-point bending was performed at a span length of 32 mm and a crosshead speed of 2.0 mm/min in accordance with JIS K 7171 (1999) using an Instron universal testing machine to measure bending strength ($\sigma$1).

(8) Measurement of Retention Rate of Bending Strength after Water Absorption

A strip-shaped test piece having a length of 60 mm and a width of 10 mm was cut out from the fiber-reinforced composite material prepared in (6) above and immersed in a constant-temperature water bath at 98°C for 48 hours. Three-point bending was performed at a span length of 32 mm and a crosshead speed of 2.0 mm/min in accordance with JIS K 7171 (1999) using an Instron universal testing machine to measure bending strength ($\sigma$2) after water absorption.
Here, the retention rate (%) of the bending strength after water absorption was determined by retention rate (%) = $\sigma$2/$\sigma$1 $\times$ 100.

(9) Resin Adhesion Amount on Surface of Glass Fiber after Fracture

Comparative evaluation was carried out on the amount of the resin adhered to the surface of the glass fiber exposed on the fracture surface of the test piece fractured in (7) above on the basis of the following four grades with reference to an element mapping image observed by scanning electromicroscope-energy dispersive X-ray spectroscopy (SEM-EDX). Glass fiber showing an area ratio (S1) of the silicon element on the surface of the glass fiber of 0 or more and 0.85 or less was rated as "Very Good", glass fiber showing an area ratio of more than 0.85 and 0.90 or less was rated as "Good", glass fiber showing an area ratio of more than 0.90 and 0.95 or less was rated as "Fair", and glass fiber showing an area ratio of more than 0.95 and 1.0 or less was rated as "Bad".
SEM observation conditions were as follows.
Apparatus: "SU8220" manufactured by Hitachi High-Technologies Corporation, acceleration voltage: 5 kV, WD setting: 10 to 15 mm, current: 10 mA, magnification: 2,000 times. EDX measurement conditions were as follows. Apparatus: "XFlash 5060" manufactured by Bruker Corporation, acceleration voltage: 5 kV, WD setting: 10 to 15 mm, current: 5 to 15 mA, magnification: 2,000 times.

(10) Resin Impregnating Property into Reinforcing Fiber

With regard to the impregnating property in the resin injection step during the production of the fiber-reinforced composite material in (6) above, comparative evaluation was carried out on the basis of the following three grades with reference to the amount of void in the fiber-reinforced composite material. Such an impregnating property that the amount of void in a fiber-reinforced composite material was less than 1%, that is, void was substantially not present, was rated as "Good", such an impregnating property that a not-resin-impregnated portion was not recognized in the external appearance of a fiber-reinforced composite material but the amount of void in the fiber-reinforced composite material was 1% or more was rated as "Fair", and such an impregnating property that a not-resin-impregnated portion was recognized in the external appearance of a fiber-reinforced composite material was rated as "Bad".
The amount of void in the fiber-reinforced composite material was calculated from an area ratio of the void in the fiber-reinforced composite material in the observation of a smoothly polished fiber-reinforced composite material cross-section under an oblique optical microscope.

(11) Measurement of Charpy Impact Value

A strip-shaped test piece having a length of 80 mm and a width of 10 mm was cut out from the fiber-reinforced composite material produced in (6) above, and the test piece notch back surface was hammer-struck in accordance with ISO 179/1eA using an Instron pendulum type tester to measure the Charpy impact value.

(Examples 8 to 11)

Using [I] as the glass fiber and [i] as the epoxy resin composition, fiber-reinforced composite materials were produced under the curing conditions shown in Table 3. The obtained fiber-reinforced composite material was excellent in both the bending strength and the retention rate of bending strength after water absorption, and the Charpy impact value was at an acceptable level. In addition, the resin adhesion amount on the fracture surface was sufficient, and a not-resin-impregnated portion and voids were not observed, which indicated that the impregnating property was excellent.

(Example 12)

A fiber-reinforced composite material was produced in the same manner as in Example 11 except that [II] was used as the glass fiber. The obtained fiber-reinforced composite material was excellent in the Charpy impact value, and the bending strength and the retention rate of bending strength after water absorption were at an acceptable level. In addition, the resin adhesion amount on the fracture surface was slightly poor, but a not-resin-impregnated portion and voids were not observed, which indicated that the impregnating property was excellent.

(Example 13)

A fiber-reinforced composite material was produced in the same manner as in Example 11 except that [III] was used as the glass fiber. The obtained fiber-reinforced composite material was quite excellent in both the bending strength and the retention rate of bending strength after water absorption, and the Charpy impact value was excellent. In addition, the resin adhesion amount on the fracture surface was sufficient, and a not-resin-impregnated portion and voids were not observed, which indicated that the impregnating property was excellent.

(Example 14)

A fiber-reinforced composite material was produced in the same manner as in Example 11 except that [IV] was used as the glass fiber. The obtained fiber-reinforced composite material was excellent in all the bending strength, the Charpy impact value, and the retention rate of bending strength after water absorption. In addition, the resin adhesion amount on the fracture surface was sufficient, and a not-resin-impregnated portion and voids were not observed, which indicated that the impregnating property was excellent.

(Example 15)

A fiber-reinforced composite material was produced in the same manner as in Example 11 except that [V] was used as the glass fiber. The obtained fiber-reinforced composite material was excellent in the bending strength and the Charpy impact value, and the retention rate of bending strength after water absorption was at an acceptable level. In addition, the resin adhesion amount on the fracture surface was sufficient, and a not-resin-impregnated portion and voids were not observed, which indicated that the impregnating property was excellent.

(Comparative Example 7)

A fiber-reinforced composite material was produced in the same manner as in Example 11 except that [VI] was used as the glass fiber. Since the glass fiber having a surface functional group that does not form a covalent bond with the isocyanate group was used, the bending strength and the Charpy impact value of the obtained fiber-reinforced composite material were poor. In addition, the resin adhesion amount on the fracture surface was insufficient, and voids were observed in a cross section of the obtained fiber-reinforced composite material.

(Comparative Example 8)

A fiber-reinforced composite material was produced in the same manner as in Example 11 except that [VII] was used as the glass fiber. Since the glass fiber having a surface functional group that does not form a covalent bond with the isocyanate group was used, the bending strength and the Charpy impact value of the obtained fiber-reinforced composite material were poor. In addition, the resin adhesion amount on the fracture surface was insufficient, and voids were observed in a cross section of the obtained fiber-reinforced composite material.

(Comparative Example 9)

A fiber-reinforced composite material was produced in the same manner as in Example 4 except that [ii] was used as the epoxy resin composition. Since a monofunctional epoxy resin having one oxirane group in the molecule was used, the bending strength, the Charpy impact value, and the retention rate of bending strength after water absorption were significantly poor.

(Comparative Example 10)

A fiber-reinforced composite material was produced in the same manner as in Example 11 except that [iii] was used as the epoxy resin composition. Since a monofunctional isocyanate curing agent having one isocyanate group in the molecule was used, the bending strength, the Charpy impact value, and the retention rate of bending strength after water absorption were significantly poor.

(Comparative Example 11)

Although [iv] was used as the epoxy resin composition, a cured product having a degree of cure of 90% was not obtained under the designated conditions.

(Comparative Example 12)

Using [I] as the glass fiber and [v] as the epoxy resin composition, a fiber-reinforced composite material was produced under the curing conditions shown in Table 4. The oxazolidone ring was not formed in the obtained fiber-reinforced composite material, it took time to inject the resin composition, and voids were observed in a cross-section of the obtained fiber-reinforced composite material.

(Comparative Example 13)

Using [I] as the glass fiber and [vi] as the epoxy resin composition, a fiber-reinforced composite material was produced under the curing conditions shown in Table 4. In the obtained fiber-reinforced composite material, the oxazolidone ring was not formed, and adhesiveness with the glass fiber was poor, whereby the bending strength and the Charpy impact value were poor.

[Table 3]

| | Example 8 | Example 9 | Example 10 | Example 11 | Example 12 | Example 13 | Example 14 | Example 15 |
|---|---|---|---|---|---|---|---|---|
| Glass fiber | [I] | [I] | [I] | [I] | [II] | [III] | [IV] | [V] |
| Epoxy resin composition | [i] | [i] | [i] | [i] | [i] | [i] | [i] | [i] |
| Injection temperature | 80°C | 80°C | 80°C | 80°C | 80°C | 80°C | 80°C | 80°C |
| Curing condition | 90°C for 120 minutes + 180°C for 120 minutes | 120°C for 120 minutes + 180°C for 120 minutes | 150°C for 120 minutes + 180°C for 120 minutes | 180°C for 240 minutes | 180°C for 240 minutes | 180°C for 240 minutes | 180°C for 240 minutes | 180°C for 240 minutes |
| Bending strength [MPa] | 250 | 260 | 270 | 270 | 250 | 280 | 260 | 260 |
| Retention rate of bending strength after water absorption [%] | 80 | 80 | 80 | 80 | 80 | 85 | 80 | 75 |
| Charpy impact strength [KJ/m$^2$] | 8 | 8 | 9 | 9 | 11 | 11 | 11 | 11 |
| Da/(Da+Db) [-] | 0.26 | 0.43 | 0.64 | 0.78 | 0.78 | 0.78 | 0.78 | 0.78 |
| Resin adhesion amount on fracture surface | Good | Good | Very Good | Very Good | Fair | Very Good | Good | Good |

(continued)

|  | Example 8 | Example 9 | Example 10 | Example 11 | Example 12 | Example 13 | Example 14 | Example 15 |
|---|---|---|---|---|---|---|---|---|
| Impregnating property | Good | Good | Good | Good | Good | Good | Good | Good |

[Table 4]

| | Comparative Example 7 | Comparative Example 8 | Comparative Example 9 | Comparative Example 10 | Comparative Example 11 | Comparative Example 12 | Comparative Example 13 |
|---|---|---|---|---|---|---|---|
| Glass fiber | [VI] | [VII] | [I] | [I] | [I] | [I] | [I] |
| Epoxy resin composition | [i] | [i] | [ii] | [iii] | [iv] | [v] | [vi] |
| Injection temperature | 80°C | 80°C | 80°C | 80°C | 80°C | 100°C | 50°C |
| Curing condition | 180°C for 240 minutes | 180°C for 240 minutes | 180°C for 240 minutes | 180°C for 240 minutes | 180°C for 240 minutes | 180°C for 240 minutes | 100°C for 60 minutes |
| Bending strength [MPa] | 210 | 200 | 190 | 190 | - | 220 | 210 |
| Retention rate of bending strength after water absorption [%] | 80 | 80 | 70 | 70 | - | 70 | 60 |
| Charpy impact strength [KJ/m$^2$] | 4 | 5 | 5 | 5 | - | 4 | 4 |
| Da/(Da+Db) [-] | 0.78 | 0.78 | 0.15 | 0.15 | - | 0 | 0 |
| Resin adhesion amount on fracture surface | Bad | Bad | Fair | Fair | - | Bad | Fair |
| Impregnating property | Fair | Fair | Fair | Fair | - | Fair | Good |

INDUSTRIAL APPLICABILITY

The present invention can provide a fiber-reinforced composite material having both high impact resistance and high tensile strength because the epoxy resin composition has a low viscosity and the carbon fiber has a perfectly circular cross-sectional shape, and thus the impregnating property at the time of injecting the epoxy resin composition into the reinforcing fiber is excellent, and the cured product of the epoxy resin composition has excellent mechanical properties. As a result, the fiber-reinforced composite material is increasingly employed especially for aircraft and automobile members, and it can be expected that the further weight reduction of aircraft and automobiles leads to the fuel consumption improvement and contribution to reduction of global warming gas emission.

In addition, since the epoxy resin composition has a low viscosity and the glass fiber has a surface functional group capable of forming a covalent bond with the isocyanate group, it is possible to provide a fiber-reinforced composite material having high bending strength and impact resistance because the impregnating property at the time of injecting the epoxy resin composition into the reinforcing fiber is excellent and the adhesiveness between the reinforcing fiber and the epoxy resin composition is moderately improved. In addition, since the epoxy resin composition to be used in the present invention has low water absorbability, it is possible to provide a fiber-reinforced composite material that suppresses a decrease in bending strength after water absorption. As a result, the material can be preferably used as a structural material of an automobile outer plate, a primary structural material and a secondary structural material of an aircraft, a wind turbine, space equipment, a railway vehicle, a ship, and the like. In addition, the material can be preferably used for electronic material applications such as semiconductors, IC trays, and notebook computers.

**Claims**

1.   A molding material for fiber-reinforced composite material, comprising:

> an epoxy resin composition; and
> carbon fiber and/or glass fiber,
> wherein the epoxy resin composition contains all of [A] to [C] below,
> the carbon fiber satisfies conditions [a] and [b] below, and
> the glass fiber has a surface functional group capable of forming a covalent bond with an isocyanate group:
>
> > [A] an epoxy resin having at least two oxirane groups in a molecule,
> > [B] an epoxy resin curing agent having at least two isocyanate groups in a molecule, and
> > [C] a catalyst, and
>
> > [a] a cross-section is substantially perfectly circular,
> > [b] an average fiber diameter is in a range of 4.0 to 8.0 $\mu$m.

2.   The molding material for fiber-reinforced composite material according to claim 1, consisting of the epoxy resin composition and the carbon fiber.

3.   The molding material for fiber-reinforced composite material according to claim 1 or 2, wherein the carbon fiber further satisfies a condition [c] below:

> [c] a surface oxygen concentration O/C is in a range of 0.03 to 0.20,
> where the surface oxygen concentration is specified by calculating the surface oxygen concentration O/C = $([O_{1s}]/[C_{1s}])$/(sensitivity correction value) from an $O_{1s}$ peak area $[O_{1s}]$ and a $C_{1s}$ peak area $[C_{1s}]$ in an X-ray photoelectron spectroscopy.

4.   The molding material for fiber-reinforced composite material according to claim 1, consisting of the epoxy resin composition and the glass fiber.

5.   The molding material for fiber-reinforced composite material according to claim 1 or 4, wherein a bending strength is 250 MPa or more in a bending test (in accordance with JIS K 7171-1994) described in the specification.

6.   The molding material for fiber-reinforced composite material according to any one of claims 1, 4, and 5, wherein an area ratio (S1) of a silicon element on a surface of the glass fiber in an element mapping image obtained when a fracture surface after a bending test (in accordance with JIS K 7171-1994) described in the specification is observed by scanning electromicroscope-energy dispersive X-ray spectroscopy (SEM-EDX) is in a range of 0 to 0.90.

7. The molding material for fiber-reinforced composite material according to any one of claims 1 and 4 to 6, wherein the surface functional group of the glass fiber is at least one functional group selected from the group consisting of a hydroxyl group, an oxirane group, an amino group, a thiol group, and a carboxyl group.

8. The molding material for fiber-reinforced composite material according to any one of claims 1 and 4 to 7, wherein the surface functional group of the glass fiber is formed by being treated with at least one selected from the group consisting of a silane coupling agent, a titanium coupling agent, an aluminum coupling agent, and a zirconium coupling agent.

9. The molding material for fiber-reinforced composite material according to any one of claims 1 to 8, wherein, when cured while raising a temperature from 30°C at 10°C/min, a specific degree of cure X, at which an absorbance ratio Da/(Da + Db) at the degree of cure X is in a range of 0.4 to 1, is present in a range of 85 to 95%,
where the absorbance ratio is specified by calculating the absorbance ratio = Da/(Da + Db) from an absorbance Da of absorption attributable to a C=O double bond of a carboxyl group of an oxazolidone ring and an absorbance Db of absorption attributable to a C=O double bond of a carboxyl group of an isocyanurate ring in FT-IR (ATR method), and the degree of cure is specified by calculating the degree of cure (%) = (QT - QR)/QT × 100 from a total heat value QT of the epoxy resin composition obtained by DSC at a temperature ramp rate of 10°C/min and a residual heat value QR of a cured product.

10. The molding material for fiber-reinforced composite material according to any one of claims 1 to 9, wherein, when cured while raising a temperature from 30°C at 10°C/min, a specific degree of cure Y, at which an absorbance ratio Da/(Da + Db) at the degree of cure Y is in a range of 0.01 to 1, is present in a range of 15 to 25%.

11. A fiber-reinforced composite material produced by curing the molding material for fiber-reinforced composite material as claimed in any one of claims 1 to 10.

12. The fiber-reinforced composite material according to claim 11, wherein an absorbance ratio Da/(Da + Db) is in a range of 0.4 to 1,
where the absorbance ratio is specified by calculating the absorbance ratio = Da/(Da + Db) from an absorbance Da of absorption attributable to a C=O double bond of a carboxyl group of an oxazolidone ring and an absorbance Db of absorption attributable to a C=O double bond of a carboxyl group of an isocyanurate ring in FT-IR (ATR method).

13. A fiber-reinforced composite material comprising:

a cured epoxy resin containing 1 mmol/g or more of oxazolidone rings; and
carbon fiber satisfying conditions [a] and [b] below:

[a] the cross-section is substantially perfectly circular, and
[b] the average fiber diameter is in the range of 4.0 to 8.0 $\mu$m.

14. A fiber-reinforced composite material comprising:

a cured epoxy resin containing 1 mmol/g or more of oxazolidone rings; and
glass fiber having a surface functional group covalently bonded to an isocyanate group in the cured epoxy resin, wherein an area ratio (S1) of a silicon element on a surface of the glass fiber in an element mapping image obtained when a fracture surface after a bending test (in accordance with JIS K 7171-1994) described in the specification is observed by scanning electromicroscope-energy dispersive X-ray spectroscopy (SEM-EDX) is in a range of 0 to 0.90.

15. The fiber-reinforced composite material according to claim 13 or 14, wherein an absorbance ratio Da/(Da + Db) is in a range of 0.4 to 1,
where the absorbance ratio is specified by calculating the absorbance ratio = Da/(Da + Db) from an absorbance Da of absorption attributable to a C=O double bond of a carboxyl group of an oxazolidone ring and an absorbance Db of absorption attributable to a C=O double bond of a carboxyl group of an isocyanurate ring in FT-IR (ATR method).

**EP 4 101 878 A1**

# INTERNATIONAL SEARCH REPORT

International application No.

PCT/JP2021/002756

| A. CLASSIFICATION OF SUBJECT MATTER |
|---|
| C08J 5/24(2006.01)i; C08K 7/06(2006.01)i; C08G 18/00(2006.01)n; C08G 59/40(2006.01)n; C08K 7/14(2006.01)n; C08K 9/04(2006.01)n; C08L 63/00(2006.01)n<br>FI:      C08J5/24 CFC; C08K7/06; C08G18/00 030; C08G59/40; C08K7/14; C08K9/04; C08L63/00 C |
| According to International Patent Classification (IPC) or to both national classification and IPC |

| B. FIELDS SEARCHED |
|---|
| Minimum documentation searched (classification system followed by classification symbols)<br>C08J5/24; C08K7/06; C08G18/00; C08G59/40; C08K7/14; C08K9/04; C08L63/00 |

Documentation searched other than minimum documentation to the extent that such documents are included in the fields searched

| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>Y | JP 60-69121 A (SIEMENS AG) 19 April 1985 (1985-04-19) claims, purpose of the invention, page 5, lower right column, line 2 from the bottom to page 7, lower right column, line 11, examples | 1, 4-7, 9-12, 14, 15<br>5-8<br>1-3, 5, 9-13, 15 |
| X<br>Y<br>Y | JP 60-20922 A (SIEMENS AG) 02 February 1985 (1985-02-02) claims, purpose of the invention, page 5, lower right column, line 10 to page 7, lower left column, the bottom line, examples | 1, 4-7, 9-12, 14, 15<br>5-8<br>1-3, 5, 9-13, 15 |
| Y | WO 2012/0S1407 A1 (TORAY INDUSTRIES, INC.) 21 June 2012 (2012-06-21) claims, paragraphs [0054]-[0058], [0076], [0083], [0085], examples | 1-3, 5, 9-13, 15 |

☒ Further documents are listed in the continuation of Box C.       ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>29 March 2021 (29.03.2021) | Date of mailing of the international search report<br>13 April 2021 (13.04.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**EP 4 101 878 A1**

**INTERNATIONAL SEARCH REPORT**

International application No.

PCT/JP2021/002756

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-37694 A (TORAY INDUSTRIES, INC.) 18 February 2010 (2010-02-18) claims, paragraphs [0011], [0037], [0042], examples | 1-3, 5, 9-13, 15 |
| Y | JP 2002-194670 A (UNITIKA GLASS FIBER CO., LTD.) 10 July 2002 (2002-07-10) claims, paragraphs [0002], [0003], [0010], [0018], examples, Brief Description of the Drawings, fig. 1 | 5-8 |
| Y | JP 56-59847 A (MATSUSHITA ELECTRIC WORKS, LTD.) 23 May 1981 (1981-05-23) claims, examples | 5-8 |
| Y | JP 60-92844 A (KANEGAFUCHI CHEM IND CO., LTD.) 24 May 1985 (1985-05-24) claims, examples | 5-8 |
| A | JP 2009-74009 A (TORAY INDUSTRIES, INC.) 09 April 2009 (2009-04-09) entire text | 1-15 |
| A | WO 2012/050171 A1 (MITSUBISHI RAYON CO., LTD.) 19 April 2012 (2012-04-19) entire text | 1-15 |
| A | JP 2002-249956 A (MITSUBISHI RAYON CO., LTD.) 06 September 2002 (2002-09-06) entire text | 1-15 |

Form PCT/ISA/210 (continuation of second sheet) (January 2015)

| **INTERNATIONAL SEARCH REPORT** | International application No. |
|---|---|
| | PCT/JP2021/002756 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

Information on patent family members

International application No.

PCT/JP2021/002756

| Patent Documents referred in the Report | Publication Date | Patent Family | Publication Date |
|---|---|---|---|
| JP 60-69121 A | 19 Apr. 1985 | US 4564651 A claims, column 2, lines 23-32, column 8, line 51 to column 10, line 44, examples EP 130454 A2 DE 3323122 A | |
| JP 60-20922 A | 02 Feb. 1985 | US 4631306 A claims, column 3, lines 29-38, column 9, line 8 from the bottom to column 12, line 25, examples EP 129787 A2 DE 3323084 A | |
| WO 2012/081407 A1 | 21 Jun. 2012 | US 2013/0274413 A1 claims, paragraphs [0069]-[0073], [0091], [0101], [0103], examples EP 2653493 A1 CA 2820131 A CN 103261290 A KR 10-2013-0131391 A | |
| JP 2010-37694 A | 18 Feb. 2010 | (Family: none) | |
| JP 2002-194670 A | 10 Jul. 2002 | (Family: none) | |
| JP 56-59847 A | 23 May 1981 | (Family: none) | |
| JP 60-92844 A | 24 May 1985 | EP 119617 A1 claims, examples CA 1259439 A | |
| JP 2009-74009 A | 09 Apr. 2009 | (Family: none) | |
| WO 2012/050171 A1 | 19 Apr. 2012 | US 2013/0295811 A1 EP 2628827 A1 CN 103154336 A KR 10-2013-0051505 A | |
| JP 2002-249956 A | 06 Sep. 2002 | (Family: none) | |

Form PCT/ISA/210 (patent family annex) (January 2015)

**INTERNATIONAL SEARCH REPORT**

| International application No. |
| --- |
| PCT/JP2021/002756 |

<Continuation of Box No. III>

The present application includes at least the following two inventions.

(Invention 1) Aspect of "using carbon fiber satisfying conditions [a] and [b]" in claims 1-3, 5, and 9-12, claim 13, and aspect of "using aforementioned specific carbon fiber" in claim 15

The aspect of using a specific carbon fiber in claims 1-3, 5, and 9-12 has the special technical feature of a "molding material composed of: a specific carbon fiber; and an epoxy resin composition containing [A] an epoxy resin having at least two oxirane groups in a molecule, [B] an epoxy resin curing agent having at least two isocyanate groups in a molecule, and [C] a catalyst", and is thus classified as invention 1.

Claim 13 and the aspect of using the aforementioned specific carbon fiber in claim 15 also have the same technical feature as the aforementioned special technical feature, and are thus classified as invention 1.

(Invention 2) Aspect of "using glass fiber having specific surface functional group" in claims 1 and 4-12, claim 14, and aspect of "using aforementioned specific glass fiber" in claim 15

Meanwhile, claim 1 also includes an invention pertaining to a "molding material composed of: a glass fiber having a specific surface functional group; and an epoxy resin composition containing [A] an epoxy resin having at least two oxirane groups in a molecule, [B] an epoxy resin curing agent having at least two isocyanate groups in a molecule, and [C] a catalyst", and the invention shares, with the invention using the specific carbon fiber and classified as invention 1, the common technical feature of a "molding material composed of: a fiber; and an epoxy resin composition containing [A] an epoxy resin having at least two oxirane groups in a molecule, [B] an epoxy resin curing agent having at least two isocyanate groups in a molecule, and [C] a catalyst".

However, said technical feature does not make a contribution over the prior art in light of the disclosures of documents 1 and 2, and thus cannot be said to be a special technical feature. Moreover, there do not exist other identical or corresponding special technical features between these inventions.

The invention using the aforementioned specific glass fiber is not substantially identical or equivalent to the invention using the specific carbon fiber and classified as invention 1.

Therefore, the aspect of "using a glass fiber having a specific surface functional group" in claims 1 and 4-12, claim 14, and the aspect of "using the aforementioned specific glass fiber" in claim 15 cannot be classified as invention 1, but are classified as invention 2.

Document 1: JP 60-69121 A (SIEMENS AG) 19 April 1985 (1985-04-19), claims, purpose of the invention, page 5, lower right column, line 2 from the bottom to page 7, lower right column, line 11, examples & US 4564651 A claims, column 2, lines 23-32, column 8 line 51 to column 10, line 44, examples & EP 130454 A2 & DE 3323122 A
Document 2: JP 60-20922 A (SIEMENS AG) 02 February 1985 (1985-02-02), claims, purpose of the invention, page 5, lower right column, line 10 to page 7, lower left column, the bottom line, examples & US 4631306 A claims, column 3, lines 29-38, column 9, line 8 from the bottom to column 12, line 25, examples & EP 129787 A2 & DE 3323084 A

Form PCT/ISA/210 (extra sheet) (January 2015)

**REFERENCES CITED IN THE DESCRIPTION**

**Patent documents cited in the description**

- WO 2011077094 A
- WO 2016158757 A

- JP 2017226773 A